(19) Europäisches Patentamt
European Patent Office
Office européen des brevets

(11) **EP 4 761 256 A1**

(12) **EUROPEAN PATENT APPLICATION**
published in accordance with Art. 153(4) EPC

(43) Date of publication:
**17.06.2026 Bulletin 2026/25**

(21) Application number: **24860100.7**

(22) Date of filing: **21.06.2024**

(51) International Patent Classification (IPC):
*H04N 23/55* (2023.01)     *H04N 23/54* (2023.01)
*H04N 23/57* (2023.01)     *G03B 17/12* (2021.01)
*G03B 30/00* (2021.01)     *G02B 13/00* (2006.01)
*G02B 15/14* (2006.01)

(52) Cooperative Patent Classification (CPC):
**G02B 13/00; G02B 15/14; G03B 17/12;
G03B 30/00; H04N 23/54; H04N 23/55; H04N 23/57**

(86) International application number:
**PCT/KR2024/008624**

(87) International publication number:
**WO 2025/048176 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.08.2023 KR 20230113861
18.09.2023 KR 20230124163**

(71) Applicant: **Samsung Electronics Co., Ltd.
Suwon-si, Gyeonggi-do 16677 (KR)**

(72) Inventor: **LEE, Yongjae
Suwon-si, Gyeonggi-do 16677 (KR)**

(74) Representative: **Appleyard Lees IP LLP
G Mill
Dean Clough Industrial Park
Halifax HX3 5AH (GB)**

(54) **CAMERA MODULE AND ELECTRONIC DEVICE COMPRISING SAME**

(57)     According to one embodiment of the present disclosure, a camera module may comprise: at least two lenses aligned along an optical axis; an optical member including a reflective surface for reflecting at least once light focused by the lenses; and an image sensor arranged to detect light reflected by the reflective surface. In one embodiment, the camera module and/or an optical system thereof satisfies the condition(s) presented in embodiment(s) of the present disclosure related to the arrangement of the lenses and the length of the optical path in the optical system and/or the condition(s) presented in embodiment(s) of the present disclosure related to the length of the incident surface and the emission surface of the optical member, and thus an image with improved quality can be obtained while telescopic performance in a miniaturized electronic device is provided. Other various embodiments are possible.

FIG. 8

## Description

[Technical Field]

An embodiment of the disclosure relates to an electronic device, for example, a camera module and/or an electronic device including the same.

[Background Art]

An electronic device may refer to a device that performs specific functions based on a built-in program, such as a home appliance, an electronic organizer, a portable multimedia player, a mobile communication terminal, a tablet PC, a video/audio device, a desktop/laptop computer, and/or a vehicle navigation device. For example, these electronic devices may output stored information as sound or video. As electronic devices have become more integrated, and ultrahigh-speed and large-capacity wireless communication has become commonplace, a single electronic device, such as a mobile communication terminal, may now be equipped with various functions. For example, not only communication functions but also entertainment functions like gaming, multimedia functions like music/video playback, communication and security functions for mobile banking, and various other functions like schedule management or an e-wallet are all integrated into a single electronic device.

Along with the development of manufacturing technology for digital cameras, electronic devices equipped with miniaturized and lightweight camera modules have been commercialized. As camera modules, for example, imaging devices are installed in electronic devices (e.g., mobile communication terminals) that are commonly carried around, users are able to easily use various functions such as video calls and/or augmented reality as well as taking photos or videos.

The above information is presented as related art only to assist with an understanding of the disclosure. No determination has been made, and no assertion is made, as to whether any of the above might be applicable as prior art with regard to the disclosure.

[Detailed Description of the Invention]

[Technical Solution]

According to an embodiment of the disclosure, a camera module may include at least two lenses aligned along an optical axis, an optical member including a reflective surface configured to reflect light focused by the lenses at least once, and an image sensor disposed to detect the light reflected by the reflective surface. In an embodiment, the camera module and/or an optical system thereof may satisfy the following [Conditional Expression 1] and [Conditional Expression 2].

$$[\text{Conditional Expression 1}]$$

$$0.1 =< TL / OTTL =< 0.6$$

$$[\text{Conditional Expression 2}]$$

$$1.25 =< Pin / Pout =< 10$$

Herein, 'TL' may be a distance from a vertex of an object-side surface of a lens (hereinafter, referred to as a 'first lens') farthest from the optical member among the at least two lenses to a vertex of an image-side surface of a lens (hereinafter, referred to as an 'n-th lens') closest to the optical member among the at least two lenses. In an embodiment, "OTTL" may be a sum of a first distance measured along the optical axis from the vertex of the object-side surface of the first lens to the reflective surface and a second distance from a point crossing the optical axis on the reflective surface to the image sensor. In an embodiment, 'Pin' may be a maximum length of the optical member measured parallel to a measuring direction of the second distance. In an embodiment, 'Pout' may be a maximum length of the optical member measured parallel to a measuring direction of the first distance.

According to an embodiment of the disclosure, an electronic device may include a camera module and a processor configured to obtain an object image using the camera module. In an embodiment, the camera module may include at least two lenses aligned along an optical axis, an optical member including a reflective surface configured to reflect light focused by the lenses at least once, and an image sensor disposed to detect the light reflected by the reflective surface. In an embodiment, the electronic device, the camera module, and/or an optical system thereof may satisfy the following [Conditional Expression 1] and [Conditional Expression 2].

[Conditional Expression 1]

$$0.1 =< TL / OTTL =< 0.6$$

[Conditional Expression 2]

$$1.25 =< Pin / Pout =< 10$$

Herein, 'TL' may be a distance from a vertex of an object-side surface of a lens (hereinafter, referred to as a 'first lens') farthest from the optical member among the at least two lenses to a vertex of an image-side surface of a lens (hereinafter, referred to as an 'n-th lens') closest to the optical member among the at least two lenses. In an embodiment, "OTTL" may be a sum of a first distance measured along the optical axis from the vertex of the object-side surface of the first lens to the reflective surface and a second distance from a point crossing the optical axis on the reflective surface to the image sensor. In an embodiment, 'Pin' may be a maximum length of the optical member measured parallel to a measuring direction of the second distance. In an embodiment, 'Pout' may be a maximum length of the optical member measured parallel to a measuring direction of the first distance.

[Brief Description of Drawings]

The above or other aspects, configurations, and/or advantages of an embodiment of the disclosure may become apparent from the following detailed description with reference to the accompanying drawings.

FIG. 1 is a block diagram illustrating an electronic device in a network environment according to an embodiment of the disclosure.

FIG. 2 is a front perspective view illustrating an electronic device according to an embodiment of the disclosure.

FIG. 3 is a rear perspective view illustrating the electronic device shown in FIG. 2 according to an embodiment of the disclosure.

FIG. 4 is an exploded front perspective view illustrating the electronic device shown in FIG. 2 according to an embodiment of the disclosure.

FIG. 5 is an exploded rear perspective view illustrating the electronic device shown in FIG. 2 according to an embodiment of the disclosure.

FIG. 6 is a cross-sectional view illustrating a portion of an electronic device according to an embodiment of the disclosure, taken along A-A' in FIG. 3.

FIG. 7 is a configuration diagram illustrating an optical path of a camera module in an electronic device according to an embodiment of the disclosure.

FIG. 8 is a diagram illustrating an optical system and/or a camera module including the same according to an embodiment of the disclosure.

FIG. 9 is a diagram illustrating the optical system and/or the camera module including the same shown in FIG. 8 according to an embodiment of the disclosure.

FIG. 10 is a graph illustrating the spherical aberration of the optical system and/or the camera module including the same shown in FIG. 8 according to an embodiment of the disclosure.

FIG. 11 is a graph illustrating the astigmatism of the optical system and/or the camera module including the same shown in FIG. 8 according to an embodiment of the disclosure.

FIG. 12 is a graph illustrating the distortion of the optical system and/or the camera module including the same shown in FIG. 8 according to an embodiment of the disclosure.

FIG. 13 is a diagram illustrating an optical system and/or a camera module including the same according to an embodiment of the disclosure.

FIG. 14 is a graph illustrating the spherical aberration of the optical system and/or the camera module including the same shown in FIG. 13 according to an embodiment of the disclosure.

FIG. 15 is a graph illustrating the astigmatism of the optical system and/or the camera module including the same shown in FIG. 13 according to an embodiment of the disclosure.

FIG. 16 is a graph illustrating the distortion of the optical system and/or the camera module including the same shown in FIG. 13 according to an embodiment of the disclosure.

FIG. 17 is a diagram illustrating an optical system and/or a camera module including the same according to an embodiment of the disclosure.

FIG. 18 is a graph illustrating the spherical aberration of the optical system and/or the camera module including the same shown in FIG. 17 according to an embodiment of the disclosure.

FIG. 19 is a graph illustrating the astigmatism of the optical system and/or the camera module including the same shown in FIG. 17 according to an embodiment of the disclosure.

FIG. 20 is a graph illustrating the distortion of the optical system and/or the camera module including the same shown in FIG. 17 according to an embodiment of the disclosure.

FIG. 21 is a diagram illustrating a camera module according to an embodiment of the disclosure.

FIG. 22 is a diagram illustrating a configuration for blocking stray light in the camera module of FIG. 21 according to an embodiment of the disclosure.

Throughout the accompanying drawings, similar reference numerals may be assigned to similar parts, components, and/or structures.

[Mode for Carrying out the Invention]

As electronic devices are miniaturized and lightweight, they may be more convenient to carry and use. In an environment where displays are getting larger so that users may enjoy a bigger screen even on portable electronic devices, the electronic devices may be made smaller and lighter by reducing their thicknesses. Difficulties may arise in mounting a camera module with good optical performance in a miniaturized electronic device. For example, although securing good optical performance in a camera module may be easier with a greater number of lenses and/or larger lens size, the design freedom for arranging the lens(es) or an image sensor may be reduced in a miniaturized electronic device. Therefore, a plurality of camera modules providing good optical performance in different fields of view, such as a telephoto camera, a wide-angle camera, an ultra-wide-angle camera, and/or a macro camera, may be mounted in a single electronic device. A telephoto camera having a smaller field of view (or a longer focal length) than other camera modules may be easily mounted in a miniaturized electronic device by including an optical member (e.g., a prism or a mirror) that changes an optical path. For example, when an optical member such as a mirror or a prism is disposed, lens(es) or an image sensor may be easily aligned. However, when an additional optical member is disposed, the number of reflections or refractions may increase in a path in which incident light reaches the image sensor, thereby increasing light reaching the image sensor via paths other than the designed path. Light incident through an undesigned path, or the resulting degradation of image quality may be referred to as 'stray light' or 'flare'.

An embodiment of the disclosure is to address at least the above-mentioned problems and/or disadvantages and to provide at least the advantages described below, and may provide a camera module including an optical member which reflects or refracts light guided to an image sensor at least once, and/or an electronic device including the same.

An embodiment of the disclosure may provide a camera module that facilitates miniaturization while providing telephoto performance by improving the design freedom of an optical path, and/or an electronic device including the same.

An embodiment of the disclosure may provide a camera module that includes an optical member and is capable of suppressing stray light or flare caused by reflection or refraction of light guided to an image sensor, and/or an electronic device including the same.

The technical objects to be achieved in the disclosure are not limited to those mentioned above, and other technical objects not mentioned will be clearly understood by those skilled in the art from the following description.

The following description with reference to the accompanying drawings may provide an understanding of various exemplary implementations of the disclosure, including the claims and corresponding content. Although the exemplary embodiments disclosed in the following description include various specific details for the purpose of aiding understanding, they are considered to be one of various exemplary embodiments. Accordingly, those skilled in the art will understand that various changes and modifications may be made to the various implementations described herein without departing from the scope and spirit of the disclosure. Further, a description of well-known functions and configurations will be avoided for clarity and conciseness.

The terms and words used in the following description and claims are not limited to referential meanings but may be used to clearly and consistently describe an embodiment of the disclosure. Accordingly, it will be apparent to those skilled in the art that the following description of various implementations of the disclosure is provided for purposes of illustration and not for the purpose of limiting the disclosure as defined by the scope of the claims and their equivalents.

Unless the context clearly dictates otherwise, it is to be understood that the singular forms "a," "an," and "the" include plural referents. Therefore, for example, a reference to "a component surface" may be understood to include one or more of the surfaces of the component.

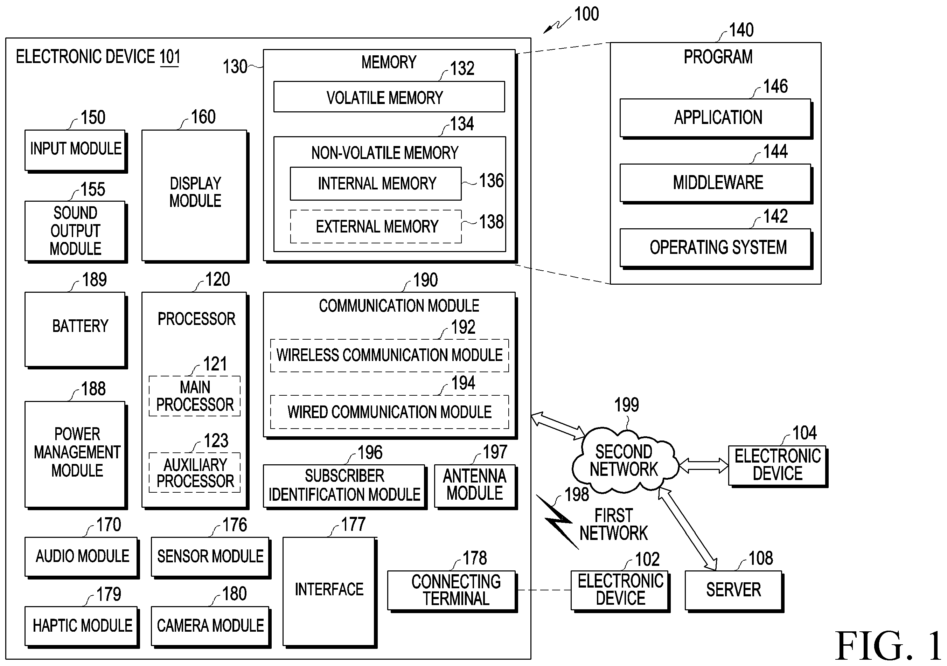

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiment(s) of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the following detailed description, a length direction, width direction, and/or thickness direction of an electronic device may be mentioned, and the length direction may be defined as a 'Y-axis direction,' the width direction as an 'X-axis direction,' and/or the thickness direction as a 'Z-axis direction.' In an embodiment, for a direction in which a component faces, 'negative/positive (-/+)' may be mentioned along with the Cartesian coordinate system illustrated in the drawings. For example, a front surface of the electronic device and/or a housing may be defined as a 'surface facing in a +Z direction,' and a rear surface thereof as a 'surface facing in a - Z direction.' In an embodiment, side surfaces of the electronic device and/or the housing may include an area facing in a +X direction, an area facing in a +Y direction, an area facing in a -X direction, and an area facing in a -Y direction. In an embodiment, the term 'X-axis direction' may be construed to include both the '-X direction' and the '+X direction'. This is based on the Cartesian coordinate system illustrated in the drawings, for the sake of brevity of description, and it should be noted that the description of these directions or components does not limit the embodiment(s) of the disclosure. For example, the Cartesian coordinate system may be defined differently from the disclosure depending on the design specifications of the electronic device or a user's usage habits.

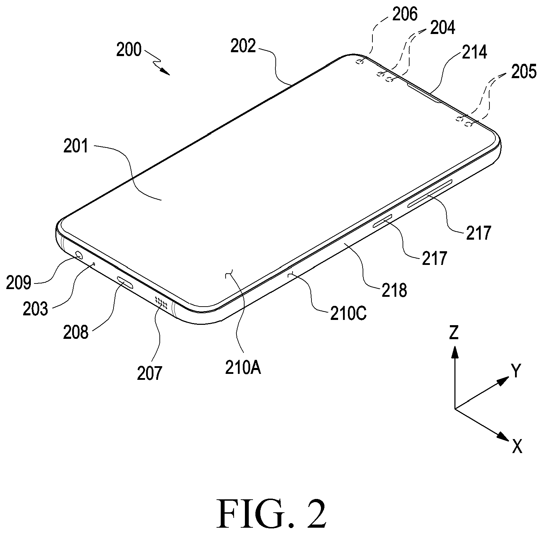

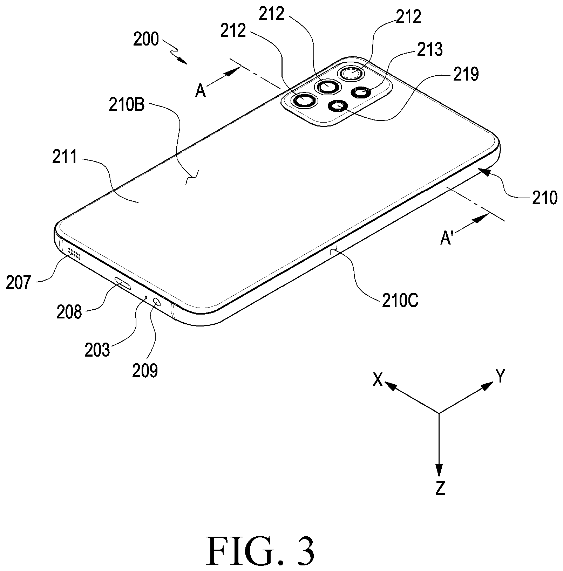

FIG. 2 is a front perspective view illustrating an electronic device 200 (e.g., the electronic device 101 of FIG. 1) according to an embodiment of the disclosure. FIG. 3 is a rear perspective view illustrating the electronic device 200 illustrated in FIG. 2 according to an embodiment of the disclosure.

Referring to FIGS. 2 and 3, the electronic device 200 (e.g., the electronic device 101 in FIG. 1) according to an embodiment may include a housing 210 which includes a first surface (or front surface) 210A, a second surface (or rear surface) 210B, and a side surface 210C surrounding a space between the first surface 210A and the second surface 210B. In an embodiment (not shown), the housing 210 may refer to a structure that forms a portion of the first surface 210A, the second surface 210B, and the side surfaces 210C of FIG. 2. According to an embodiment, at least a portion of the first surface 210A may be formed by a front plate 202 (e.g., a glass plate or polymer plate including various coating layers) which is at least partially substantially transparent. The second surface 210B may be formed by a rear plate 211 which is substantially opaque. The rear plate 211 may be formed of, for example, coated or tinted glass, ceramic, a polymer, a metal (e.g., aluminum, stainless steel (STS), or magnesium), or a combination of at least two of these materials. The side surface 210C may be coupled to the front plate 202 and the rear plate 211 and formed by a side structure (or "side bezel structure") 218 including a metal and/or a polymer. In an embodiment, the rear plate 211 and the side structure 218 may be integrally formed and include the same material (e.g., a metal material such as aluminum).

While not shown, the front plate 202 may include extended area(s) which are bent and extend seamlessly from at least a portion of an edge toward the rear plate 211. In an embodiment, the front plate 202 (or the rear plate 211) may include only one of the areas bent and extended toward the rear plate 211 (or the front plate 202) at one edge of the first surface 210A. According to an embodiment, the front plate 202 or the rear plate 211 may have a substantially flat shape, and in this case, may not include any bent and extended area. When a bent and extended area is included, the electronic device 200 may have a smaller thickness in a portion including the bent and extended area than in the other portions.

According to an embodiment, the electronic device 200 may include at least one of a display 201, audio modules 203, 207, and 214, sensor modules 204 and 219, camera modules 205, 212, and 213, key input devices 217, a light emitting element 206, or connector holes 208 and 209. In an embodiment, the electronic device 101 may not be provided with at least one (e.g., a key input device 217 or the light emitting element 206) of the components or may additionally include other components.

The display 201 may be exposed, for example, through a substantial portion of the front plate 202. In an embodiment, at least a portion of the display 201 may be exposed through the front plate 202 forming the first surface 210A or a portion of the side surface 210C. In an embodiment, a corner of the display 201 may be formed substantially in the same shape as that of an adjacent periphery of the front plate 202. In an embodiment (not shown), a gap between the periphery of the display 201 and the periphery of the front plate 202 may be substantially equal to increase the visually exposed area of the display 201.

In an embodiment (not shown), a recess or an opening may be formed in a portion of a screen display area, and at least one of the audio module 214, the sensor module 204, the camera module 205, or the light emitting element 206, which is aligned with the recess or the opening, may be included. In an embodiment (not shown), at least one of the audio module 214, the sensor module 204, the camera modules 205, a fingerprint sensor (not shown), or the light emitting element 206 may be included on the rear surface of the screen display area of the display 201. In an embodiment (not shown), the display 201 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 204 and 219 and/or at least some of the key input devices 217 may be disposed in areas (or spaces) overlapping the display 201.

According to an embodiment, the audio modules 203, 207, and 214 may include a microphone hole 203 and speaker holes 207 and 214. A microphone for obtaining an external sound may be disposed in the microphone hole 203, and in an embodiment, a plurality of microphones may be disposed to detect the direction of a sound. The speaker holes 207 and 214 may include an external speaker hole 207 and a receiver hole 214 for calls. In an embodiment, the speaker holes 207 and 214 and the microphone hole 203 may be implemented as a single hole, or a speaker (e.g., a piezo speaker) may be included without the speaker holes 207 and 214.

According to an embodiment, the sensor modules 204 and 219 may generate an electrical signal or data value corresponding to an internal operating state or an external environmental state of the electronic device 200. The sensor modules 204 and 219 may include, for example, a first sensor module 204 (e.g., a proximity sensor) and/or a second sensor module (not shown) (e.g., a fingerprint sensor), disposed on the first surface 210A of the housing 210, and/or a third sensor module 219 and/or a fourth sensor module (e.g., a fingerprint sensor), disposed on the second surface 210B of the housing 210. The fingerprint sensors may be disposed on the second surface 210B or the side surface 210C as well as on the first surface 210A (e.g., the display 201) of the housing 210. The electronic device 200 may further include a sensor module which is not shown, for example, at least one of a gesture sensor, a gyro sensor, a barometric pressure sensor, a magnetic sensor, an acceleration sensor, a grip sensor, a color sensor, an IR sensor, a biometric sensor, a temperature sensor, a humidity sensor, or an illuminance sensor 204.

According to an embodiment, the camera modules 205, 212, and 213 may include a first camera module 205 disposed on the first surface 210A of the electronic device 200, and a second camera module 212 and/or a flash 213 disposed on the second surface 210B. The camera modules 205 and 212 may include one or more lenses, an image sensor, and/or an ISP. The flash 213 may include, for example, a light emitting diode (LED) or a xenon lamp. In an embodiment, two or more lenses (an IR camera, a wide-angle lens, and a telephoto lens) and image sensors may be arranged on one surface of the electronic device 200. In an embodiment, the flash 213 may emit IR light, and IR light emitted by the flash 213 and reflected from an object may be received through the third sensor module 219. The electronic device 200 or the processor of the electronic device 200 may detect depth information of the object based on a time at which the IR light is received by the third sensor module 219.

According to an embodiment, the key input devices 217 may be disposed on the side surface 210C of the housing 210. In an embodiment, the electronic device 200 may not include some or any of the key input devices 217, and the key input devices 217 which are not included may be implemented in other forms such as soft keys on the display 201. In an embodiment, the key input devices 217 may include a sensor module 316 disposed on the second surface 210B of the housing 210.

According to an embodiment, the light emitting element 206 may be disposed, for example, on the first surface 210A of the housing 210. The light emitting element 206 may provide, for example, state information about the electronic device 200 in the form of light. In an embodiment, the light emitting element 206 may provide, for example, a light source interworking with an operation of the camera module 205. The light emitting element 206 may include, for example, an LED, an IR LED, and a xenon lamp.

According to an embodiment, the connector holes 208 and 209 may include a first connector hole 208 capable of accommodating a connector (e.g., a USB connector) for transmitting and receiving power and/or data to and from an external electronic device and/or a second connector hole (e.g., an earphone jack) 209 capable of accommodating a connector for transmitting and receiving an audio signal to and from an external electronic device.

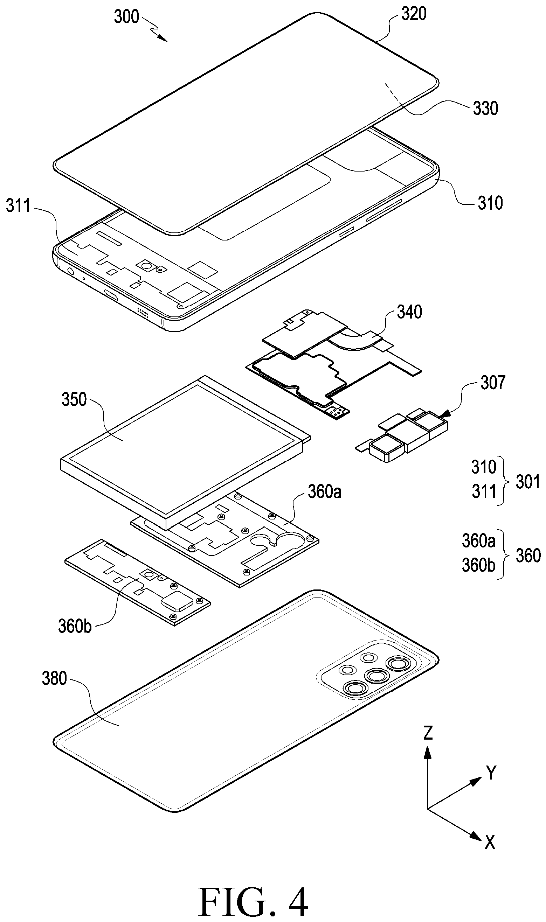

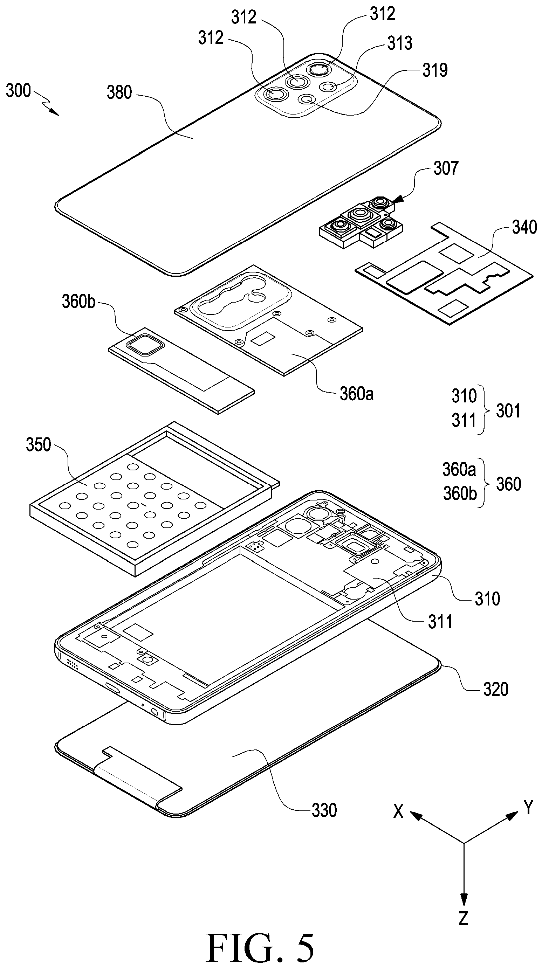

FIG. 4 is an exploded perspective view illustrating the front surface of the electronic device 200 illustrated in FIG. 2 according to an embodiment of the disclosure. FIG. 5 is an exploded perspective view illustrating the rear surface of the electronic device 200 illustrated in FIG. 2 according to an embodiment of the disclosure.

Referring to FIGS. 4 and 5, an electronic device 300 (e.g., the electronic device 200 of FIG. 2 or 3) may include a side structure 310, a first support member 311 (e.g., a bracket), a front plate 320 (e.g., the front plate 202 of FIG. 2), a display 330 (e.g., the display 201 of FIG. 2), a printed circuit board (or a board assembly) 340, a battery 350, a second support member 360 (e.g., a rear case), an antenna, a camera assembly 307, and a rear plate 380 (e.g., the rear plate 211 of FIG. 3). In an embodiment, the electronic device 300 may not be provided with at least one (e.g., the first support member 311 or the second support member 360) of the components or may additionally include other components. At least one of the components of the electronic device 300 may be identical or similar to at least one of the components of the electronic device 200 in FIG. 2 or FIG. 3, and any redundant description will be omitted below.

According to an embodiment, at least a portion of the first support member 311 may be provided to have a flat plate shape. In an embodiment, the first support member 311 may be disposed inside the electronic device 300 and connected to the side structure 310, or may be formed integrally with the side structure 310. The first support member 311 may be formed of, for example, a metal material and/or a non-metallic (e.g., polymer) material. When formed at least partially of a metal material, the side structure 310 or a portion of the first support member 311 may function as an antenna. The first support member 311 may have one surface coupled to a display 330 and the other surface coupled to the printed circuit board 340. A processor, memory, and/or an interface may be mounted on the printed circuit board 340. The processor may include, for example, one or more of a central processing unit, an application processor, a graphics processing unit, an image signal processor, a sensor hub processor, or a communication processor.

According to an embodiment, the first support member 311 and the side structure 310 may be combined to be referred to as a front case or a housing 301. In an embodiment, the housing 301 may be generally understood as a structure for receiving, protecting, or disposing the printed circuit board 340 or the battery 350. In an embodiment, the housing 301 may be understood as including a structure that may be visually or tactilely recognized by a user on the exterior of the electronic device 300, for example, the side structure 310, the front plate 320, and/or the rear plate 380. In an embodiment, the 'front or rear surface of the housing 301' may refer to the first surface 210A of FIG. 2 or the second surface 210B of FIG. 3. In an embodiment, the first support member 311 may be located between the front plate 320 (e.g., the first surface 210A of FIG. 2) and the rear plate 380 (e.g., the second surface 210B of FIG. 3) and function as a structure on which electrical/electronic components such as the printed circuit board 340 or the camera assembly 307 are disposed.

The memory may include, for example, volatile memory or nonvolatile memory.

The interface may include, for example, a high definition multimedia interface (HDMI), a universal serial bus (USB) interface, an SD card interface, and/or an audio interface. The interface may, for example, electrically or physically connect the electronic device 300 to an external electronic device, and may include a USB connector, an SD card/MMC connector, or an audio connector.

According to an embodiment, the second support member 360 may include, for example, an upper support member 360a and a lower support member 360b. In an embodiment, the upper support member 360a may be disposed to surround the printed circuit board 340, together with a portion of the first support member 311. A circuit device (e.g., a processor, a communication module, or memory) implemented in the form of an integrated circuit chip or various electrical/electronic components may be disposed on the printed circuit board 340, and according to an embodiment, the printed circuit board 340 may be provided with an electromagnetic shielding environment from the upper support member 360a. In an embodiment, the lower support member 360b may be used as a structure on which electrical/electronic components such as a speaker module and an interface (e.g., a USB connector, an SD card/MMC connector, or an audio connector) may be disposed. In an embodiment, electrical/electronic components such as a speaker module and an interface (e.g., a USB connector, an SD card/MMC connector, or an audio connector) may be disposed on an additional printed circuit board (not shown). In this case, the lower support member 360b may be disposed to surround the additional printed circuit board, together with another portion of the first support member 311. The speaker module or interface disposed on the additional printed circuit board not shown or the lower support member 360b may be disposed to correspond to the audio module 207 or the connector hole 208 and 209 of FIG. 2.

According to an embodiment, the battery 350, which is a device for supplying power to at least one component of the electronic device 300, may include, for example, a non-rechargeable primary battery, a rechargeable secondary battery, or a fuel cell. At least a portion of the battery 350 may be disposed substantially on the same plane as, for example, the printed circuit board 340. The battery 350 may be integrally disposed within the electronic device 300, and may also be detachably disposed in the electronic device 300.

Although not shown, the antenna may include a conductive pattern implemented on the surface of the second support member 360, for example, by laser direct structuring. In an embodiment, the antenna may include a printed circuit pattern formed on the surface of a thin film, and the thin film-shaped antenna may be disposed between the rear plate 380 and the battery 350. The antenna may include, for example, a near field communication (NFC) antenna, a wireless charging antenna, and/or a magnetic secure transmission (MST) antenna. The antenna may, for example, perform short-range communication with an external device or wirelessly transmit and receive power required for charging. In an embodiment, another antenna structure may be formed by a portion or combination of the side structure 310 and/or the first support member 311.

According to an embodiment, the camera assembly 307 may include at least one camera module, for example, at least one of camera modules 212 and 213 of FIG. 3. Inside the electronic device 300, the camera assembly 307 may receive at least a portion of light incident through an optical hole or camera windows 312, 313, and 319. In an embodiment, the camera assembly 307 may be disposed on the first support member 311 at a location adjacent to the printed circuit board 340. In an embodiment, the camera modules of the camera assembly 307 may be generally aligned with one of the camera windows 312, 313, and 319 and at least partially surrounded by the second support member 360 (e.g., the upper support member 360a). In disposing the camera assembly 307 or the camera modules 212 and 213 of FIG. 3, the electronic device 300 or the first support member 311 may include at least one structure, such as a support wall or an elastic member, to mount or secure the camera assembly 307.

In the detailed description below, reference may be made to the electronic devices 200 and 300 of the preceding embodiments, and it should be noted that the same reference numerals or no reference numerals may be assigned to components which may be easily understood through the preceding embodiments in the drawings, and their detailed description may also be avoided.

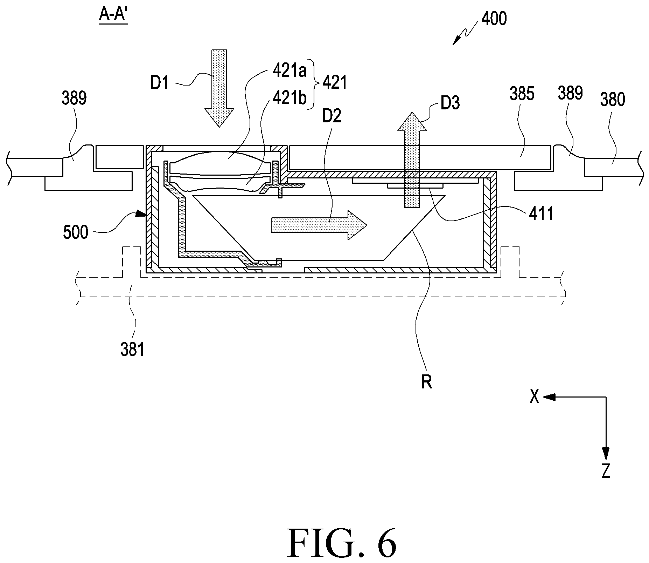

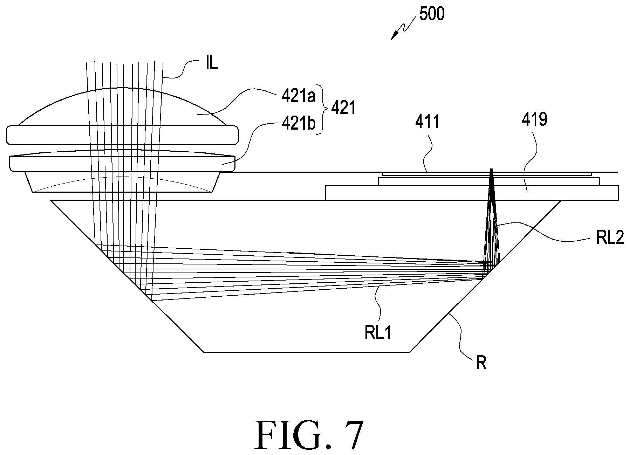

FIG. 6 is a cross-sectional view illustrating a portion of an electronic device 400 (e.g., the electronic devices 101, 200, and 300 of FIGS. 1 to 5) according to an embodiment of the disclosure, taken along A-A' in FIG. 3. FIG. 7 is a configuration diagram illustrating an optical path of a camera module 500 in the electronic device 400 according to an embodiment of the disclosure.

Referring to FIGS. 3 and 6, the electronic device 400 (e.g., the electronic devices 101, 200, and 300 of FIGS. 1 to 5) according to an embodiment of the disclosure may include a cover plate 385 disposed on one surface (e.g., the second surface 210B in FIG. 3) thereof. In an embodiment, the cover plate 385 may be a portion of the rear plate 380. In an embodiment, the cover plate 385 may be coupled to the rear plate 380 through a deco member 389, and when viewed from the outside, the deco member 389 may be exposed in a form that surrounds the perimeter of the cover plate 385. According to an embodiment, the cover plate 385 may provide a plurality of transparent areas, and the electronic device 400 may receive external light or emit light to the outside through at least one of the transparent areas. For example, the electronic device 400 may include at least one camera module 500 (e.g., the camera modules 180, 205, 212, and 213 of FIGS. 1 to 3) disposed to correspond to at least some of the transparent areas and at least one light source (e.g., a flash or an IR light source) disposed to correspond to another of the transparent areas. In an embodiment, the camera module 500 and/or the light source may receive external light or emit light to the outside of the electronic device 400. In an embodiment, the electronic device 400 and/or the camera module 500 may further include a camera support member 381. The camera support member 381 may dispose or fix at least one of the camera module 500 and/or another adjacent camera module (e.g., a wide-angle camera, an ultra-wide-angle camera, and/or a macro camera) on the inner side of the rear plate 380 and/or the cover plate 385. In an embodiment, the camera support member 381 may be substantially a portion of the first support member 311 and/or the second support member 360 of FIG. 4.

According to an embodiment, the electronic device 400 may include at least one of a wide-angle camera, an ultra-wide-angle camera, a macro camera, a telephoto camera, or an IR photodiode as the camera module 500 and/or a light-receiving element, and may include a flash (e.g., the flash 213 in FIG. 3) or an IR laser diode as a light source and/or a light-emitting element. In an embodiment, the electronic device 400 may detect the distance to an object and/or a depth by radiating IR laser light toward the object and receiving the IR laser light reflected by the object using an IR laser diode and an IR photodiode. In an embodiment, the electronic device 400 may capture an object by combining one or more of the cameras, and provide illumination toward the object using the flash as needed.

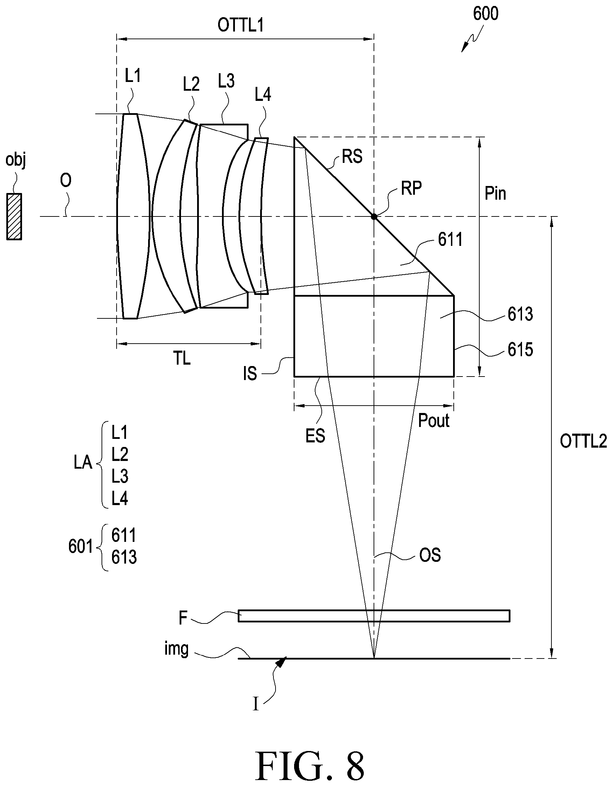

According to an embodiment, among the cameras, the wide-angle camera, the ultra-wide-angle camera, and/or the macro camera may have a shorter length in an optical axis direction of lens(es), compared to a telephoto camera (e.g., the camera module 500). For example, the telephoto camera (e.g., the camera module 500), which has a relatively small field of view and a relatively long focal length, may have a longer overall lens length than other cameras (e.g., the wide-angle camera, the ultra-wide-angle camera, and/or the macro camera). The term 'overall lens length' may be the distance from an object-side surface of the first object-side lens to an imaging plane of an image sensor 411. As in an embodiment to be described later (a camera module 600 and/or an optical system thereof in FIG. 8), when other optical member(s) (e.g., mirror(s) and/or prism(s)) are disposed between the lens(es) and the image sensor, the 'overall lens length' may be the distance from the object-side surface of the first object-side lens to a sensor-side surface of the first sensor-side lens. In an embodiment, even when the lens(es) are arranged along the thickness direction of the electronic device 400 (e.g., the direction of a thickness measured in the Z-axis direction of FIGS. 2 to 6), the wide-angle camera, the ultra-wide-angle camera, and/or the macro camera may not significantly affect the thickness of the electronic device 400. For example, the wide-angle camera, the ultra-wide-angle camera, and/or the macro camera may be disposed in the electronic device 400 in a state where the direction of light incident on the electronic device 400 from the outside and the optical axis direction of the lens(es) are substantially the same. In an embodiment, compared to the wide-angle camera, the ultra-wide-angle camera, and/or the macro camera, the camera module 500 (e.g., a telephoto camera) may have a small field of view, but may be useful for capturing an object at a longer distance. In an embodiment of the disclosure, the camera module 500 may include at least one optical member R that reflects and/or refracts incident light IL in a different direction. The camera module 500 may easily implement a telephoto function, while suppressing an increase in the thickness of the electronic device 400, by including the at least one optical member R.

Referring to FIGS. 6 and 7, a folded camera (e.g., the camera module 500) may include a lens assembly 421 (e.g., lenses 421a and 421b), the at least one optical member R (e.g., a refractive member or a reflective member), and/or the image sensor 411. In an embodiment, the at least one optical member R may reflect or refract light (e.g., the incident light IL) focused or guided by the lens assembly 421 at least once and guide it to the image sensor 411. In an embodiment, the optical member R may include, for example, a prism and/or a mirror. For example, the optical member R may be formed as a prism including at least one mirror. In an embodiment, the optical member R may reflect and/or refract the light IL incident in a first direction D1 to a second direction D2 crossing the first direction D1. The first direction D1 may mean, for example, a direction in which the light IL is incident from the outside to the electronic device 400 and/or the camera module 500, when an object is captured. In an embodiment, the first direction D1 may refer to a capturing direction, an object direction, an orientation direction of the camera module 500, and/or a direction parallel thereto. In an embodiment, the first direction D1 may be parallel to the thickness direction of the electronic device 400 and/or the Z-axis direction.

According to an embodiment, light RL1 that is reflected or refracted inside the optical member R and travels in the second direction D2 may be reflected and/or refracted by another area inside the optical member R and travel in a third direction D3 crossing the second direction D2. In an embodiment, the third direction D3 may be substantially perpendicular to the second direction D2. For example, the third direction D3 may mean a direction parallel to the Z-axis direction. However, embodiment(s) of the disclosure are not limited thereto, and the third direction D3 may be a direction inclined with respect to the second direction D2 and/or an X-Y plane depending on the arrangement and specifications of the camera module 500 and/or the optical member R in the electronic device 400. In an embodiment, the third direction D3 may be substantially parallel to the first direction D1.

According to an embodiment, the image sensor 411 may be configured to detect light RL2 that travels along the third direction D3 after being reflected and/or refracted at least once inside the optical member R. For example, the light IL incident from the outside may be detected by the image sensor 411 after being reflected or refracted at least once (e.g., twice in the illustrated embodiment) inside the optical member R, and the electronic device 400, the processor 120 of FIG. 1, and/or the camera module 500 may obtain an object image based on a signal and/or information detected through the image sensor 411. In an embodiment, the image sensor 411 may be disposed substantially parallel to the XY plane. For example, when the camera module 500 has an anti-shake function with a structure that shifts the image sensor 411, the image sensor 411 may move horizontally on a plane substantially perpendicular to the first direction D1 and/or the third direction D3.

According to an embodiment, in performing an optical image stabilizing operation, the image sensor 411 may be shifted in the length direction (e.g., Y-axis direction) and/or the width direction (e.g., X-axis direction) of the electronic device 400. For example, as the image sensor 411 is disposed on the plane substantially perpendicular to the first direction D1 and/or the third direction D3, it may be easy to increase the size of the image sensor 411 and/or secure a space for the anti-shake operation in an electronic device with a small thickness (e.g., a thickness of approximately 10 mm or less). In an embodiment, when the camera module 500 is used as a telephoto camera, the quality of a captured image may be further enhanced by incorporating the anti-shake operation. In an embodiment, when the image sensor 411 is enlarged, the performance of the camera module 500 may be further improved.

According to an embodiment, the lens assembly 421 may guide and/or focus the light IL incident in the first direction D1 to the optical member R. In an embodiment, the lens assembly 421 and/or the first lens (e.g., a first lens 421a) disposed on an object side in the camera module 500 may have a positive refractive power. For example, as the first lens 421a is configured to focus and/or align the light IL incident from the outside to the optical member R, an optical system from the first lens 421a to the image sensor 411 may be miniaturized. In an embodiment, the lens assembly 421 may further include an additional lens (e.g., second lens(es) 421b) for focusing and/or aligning the light incident from the outside.

According to an embodiment, at least one of the first lens 421a and/or the second lens(es) 421b may move forward and backward in a direction (e.g., the first direction D1 in FIG. 6) in which light is incident. For example, the electronic device 400 and/or the camera module 500 may perform focal length adjustment and/or focus adjustment by moving at least one of the first lens 421a and/or the second lens(es) 421b forward and backward. In an embodiment, focal length adjustment and/or focus adjustment may be performed by moving the image sensor 411 forward and backward along a direction (e.g., the third direction D3 in FIG. 6) in which the light indicated by 'RL2' is incident.

According to an embodiment, the electronic device 400 and/or the camera module 500 may further include an IR cut filter 419. In an embodiment, the IR cut filter 419 may suppress or substantially block light in the IR and/or near-IR wavelength band from being incident on the image sensor 411, and may be disposed at any position in an optical path between the first lens 421a and the image sensor 411. In an embodiment, as the IR cut filter 419 is disposed at a position close to the image sensor 411 (e.g., between the image sensor 411 and the optical member R), visual exposure of the IR cut filter 419 to the outside may be suppressed and/or prevented. In an embodiment, the optical member R may include an IR cut coating layer, in which case the IR cut filter 419 may be omitted. As a result, the image sensor 411 may substantially detect light that has passed through the IR cut filter 419 (or the IR cut coating layer).

The optical member R according to embodiment(s) of the disclosure may be optionally designed according to the structure of the camera module 500. For example, in an embodiment, the optical member R may have a triangular prism shape. In an embodiment, the optical member R may have a trapezoidal prism shape. The shape of the optical member R is not limited to the structure illustrated in the disclosure. For example, as long as the optical member R reflects, refracts, or transmits light, the optical member R may have a structure (e.g., a parallelogram prism shape) other than a triangular prism or a trapezoidal prism. In an embodiment, various types of optical members R may be arranged. For example, the optical member R may be disposed as a prism. For example, the optical member R may be disposed as at least one mirror. In an embodiment, the optical member R may include a substantially transparent material. For example, the optical member R may be made of glass.

According to an embodiment, the optical member R may be implemented by combining a plurality of prisms or mirrors. For example, the optical member R in the shape of a parallelogram prism or a trapezoidal prism may be implemented by combining a triangular prism and/or a quadrilateral prism. As such, in implementing the optical member R according to embodiment(s) of the disclosure, it should be noted that various optical elements such as a reflective member, a prism, and/or a mirror may be selectively combined, and the shape or number of optical elements are not limited to the embodiments illustrated in the drawings. In an embodiment, when the optical member R is implemented by combining a plurality of optical elements, it may be easy to dispose a light blocking structure. The 'light blocking structure' may refer to a structure that suppresses, mitigates, or blocks light incident on the optical member R through an undesigned path or light traveling in an undesigned path inside the optical member R from reaching the image sensor 411. The configuration of the optical member R will be more easily understood from the embodiments described later. In embodiment(s) of the disclosure, the term 'optical system' may be understood to include a lens assembly and/or an optical member provided as a structure that focuses or guides external light to an image sensor.

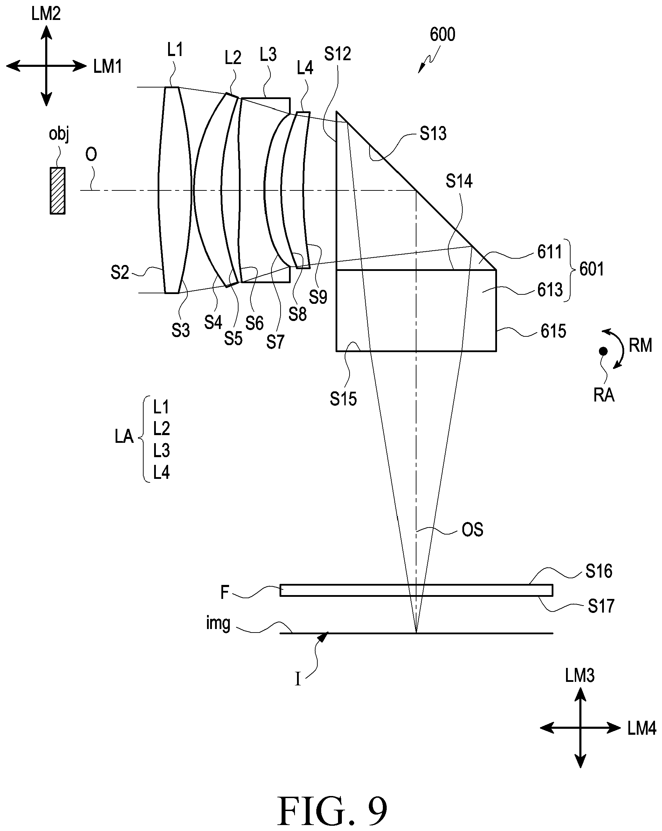

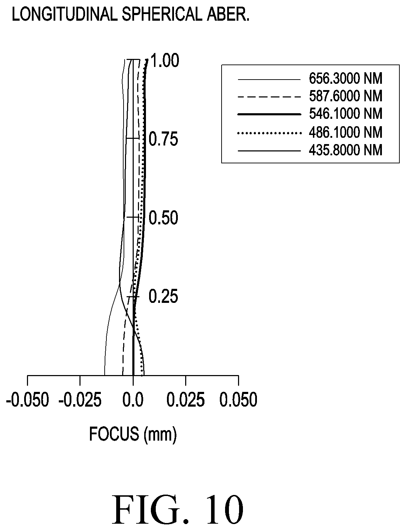

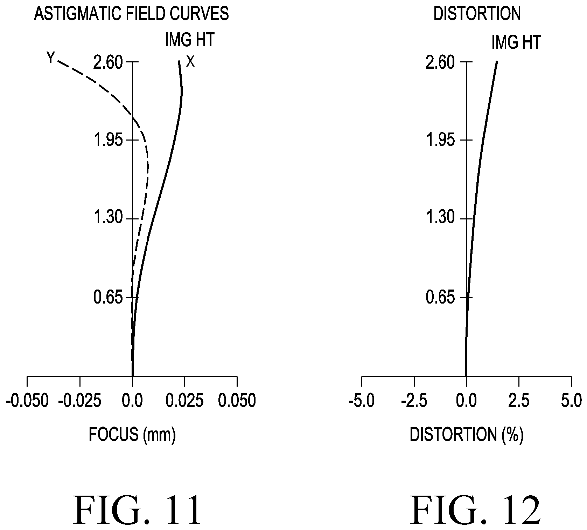

FIG. 8 is a diagram illustrating an optical system and/or a camera module 600 (e.g., the camera assembly 307 of FIG. 5 or the camera module 500 of FIG. 6 or FIG. 7) including the same according to an embodiment of the disclosure. FIG. 9 is a diagram illustrating the optical system and/or the camera module 600 including the same shown in FIG. 8 according to an embodiment of the disclosure. FIG. 10 is a graph illustrating the spherical aberration of the optical system and/or the camera module 600 including the same shown in FIG. 8 according to an embodiment of the disclosure. FIG. 11 is a graph illustrating the astigmatism of the optical system and/or the camera module 600 including the same shown in FIG. 8 according to an embodiment of the disclosure. FIG. 12 is a graph illustrating the distortion of the optical system and/or the camera module 600 including the same shown in FIG. 8 according to an embodiment of the disclosure.

FIG. 10 is a graph illustrating the spherical aberration of the camera module 600 according to an embodiment of the disclosure. A horizontal axis represents longitudinal spherical aberration coefficients, and a vertical axis represents normalized distances from an optical axis O, showing changes in longitudinal spherical aberration according to wavelengths of light. The longitudinal spherical aberration is shown for light with wavelengths of, for example, 656.3000(NM), 587.6000(NM), 546.1000(NM), 486.1000(NM), and 435.8000(NM), respectively. FIG. 11 is a graph illustrating the astigmatic field curves of the camera module 600 according to an embodiment of the disclosure, for light with a wavelength of 546.1000(NM). 'X' represents a sagittal plane, and 'Y' represents a tangential plane (or meridional plane). FIG. 12 is a graph illustrating the distortion of the camera module 600 according to an embodiment of the disclosure, for light with a wavelength of 546.1000(NM). In the following description, it should be noted that the camera module(s) 600 is a structure including afore-described optical member(s) 601 (e.g., the optical member(s) R in FIGS. 6 and 7) disposed between lens(es) L1, L2, L3, and L4 and an image sensor I. It is to be noted that the sign negative/positive in the graph illustrating spherical aberration, astigmatism, and/or distortion may be reversed depending on the number of times light is reflected and/or refracted by the optical member(s) R or 601.

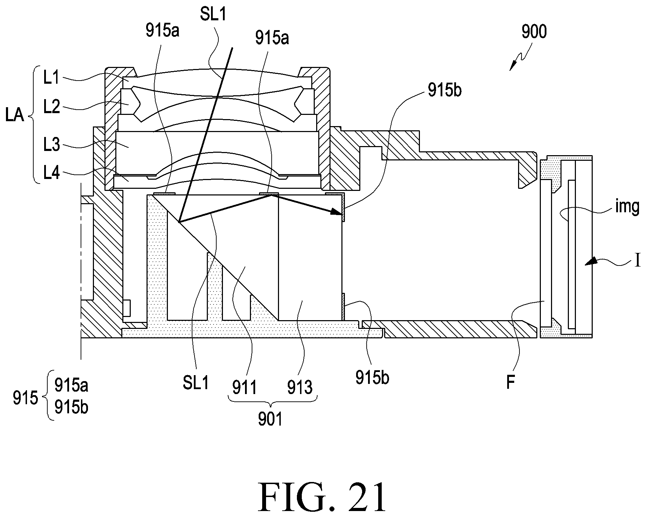

Referring to FIGS. 8 to 12, the camera module 600 (and/or the optical system thereof) according to an embodiment of the disclosure may include a lens assembly LA (e.g., at least two lenses L1, L2, L3, and L4), the optical member 601 including reflective surface(s) RS, and/or the image sensor I disposed to detect light reflected by the reflective surface(s) RS. In the illustrated embodiment, the lens assembly LA may be shown as including four lenses L1, L2, L3, and L4, by way of example. The camera module 600 and/or the optical system thereof may suppress the degradation of image quality caused by stray light or flare while realizing telephoto performance, by satisfying condition(s) described below regarding the arrangement of the lens(es) L1, L2, L3, and L4, their arrangements relative to the image sensor I, and/or the relative size of surface(s) (e.g., an incident surface IS and an emission surface ES) through which light passes in the optical member 601 or the reflective surface(s) RS. In an embodiment, at least some of the condition(s) described below for the camera module 600 and/or the optical system thereof may provide an environment suitable for the arrangement or implementation of, for example, a light blocking structure (e.g., a light blocking member 915 or 915a and 915b in FIG. 21). Herein, the 'light blocking structure' may refer to a structure that blocks the travel of light along an undesigned path or absorbs light traveling along an undesigned path. In an embodiment, the light blocking structure or the light blocking member may be implemented in the form of a layer formed by a process such as printing, painting, coating, deposition, and/or plating, or may be implemented in the form of an attachment such as a film or a sheet.

According to an embodiment, the at least two lenses L1, L2, L3, and L4 may be sequentially aligned along the optical axis O, and in the illustrated embodiment, the camera module 600 and/or the lens assembly may include four lenses L1, L2, L3, and L4. The optical axis O is, for example, a virtual axis passing through vertices of object-side surfaces and/or vertices of image-side surfaces of the lens(es) L1, L2, L3, and L4, and may serve as a reference for disposing or arranging the lenses L1, L2, L3, and L4. In an embodiment, even if the lens(es) L1, L2, L3, and L4 rotate about the optical axis O, the optical properties or performance of the camera module 600 may not change. In an embodiment, the lens(es) L1, L2, L3, and L4 may focus or guide light incident from the outside to the optical member 601 and/or the image sensor I. For example, the light focused by the lens(es) L1, L2, L3, and L4 may be incident on the optical member 601. The optical member 601 (e.g., the reflective surface RS) may, for example, reflect the light focused by the lens(es) L1, L2, L3, and L4 at least once and guide it to the image sensor I. The relative position or angle of the image sensor I with respect to the lens(es) L1, L2, L3, and L4 may be implemented variously through the arrangement of the optical member 601 or the reflective surface RS. For example, as the optical member 601 is disposed, the camera module 600 may be miniaturized while having favorable telephoto performance.

According to an embodiment, among the lenses L1, L2, L3, and L4, a lens disposed farthest from the image sensor I or the optical member 601 may be referred to as a first lens L1. For example, when external light is incident, a lens that the external light first transmits through may be defined as the first lens L1. In an embodiment, the first lens L1 may be referred to as the 'first lens disposed on an object side'. When the camera module 600 includes a plurality of lenses L1, L2, L3, and L4, ordinal numbers such as 'first', 'second', 'third', 'fourth', ... 'n-th' may be used for the respective lenses L1, L2, L3, and L4 according to an order in which external light transmits through to be incident on the image sensor I. In an embodiment, a lens disposed closest to the image sensor I or the optical member 601 among the at least two lenses L1, L2, L3, and L4 may be referred to as an 'n-th lens'. The n-th lens in the camera module 600 of FIGS. 8 and 9 may be understood as a fourth lens L4.

According to an embodiment, the first lens L1 may have a positive refractive power. When the first lens (e.g., the first lens L1) disposed on the object side has a positive refractive power, the magnitude of an entire light flux may be reduced, facilitating the miniaturization of the optical system or the camera module 600. In an embodiment, the first lens L1 may provide an environment that may ensure chromatic aberration correction and a favorable focal length by having a refractive index or dispersion value (e.g., Abbe number) within a specified range. This will be described again below.

According to an embodiment, similar to the first lens L1, the n-th lens (e.g., the fourth lens L4) disposed closest to the image sensor I or the optical member 601 may facilitate ease of manufacturing and aberration correction by having a refractive index within a specified range. For example, as the fourth lens L4 has a refractive index of approximately 1.6 or more and approximately 1.7 or less, it may be manufactured of a material (e.g., plastic) that facilitates the implementation of a designed shape, and provide an environment that facilitates control of aberration such as field curvature and/or astigmatism. The configuration of the n-th lens will be described again below.

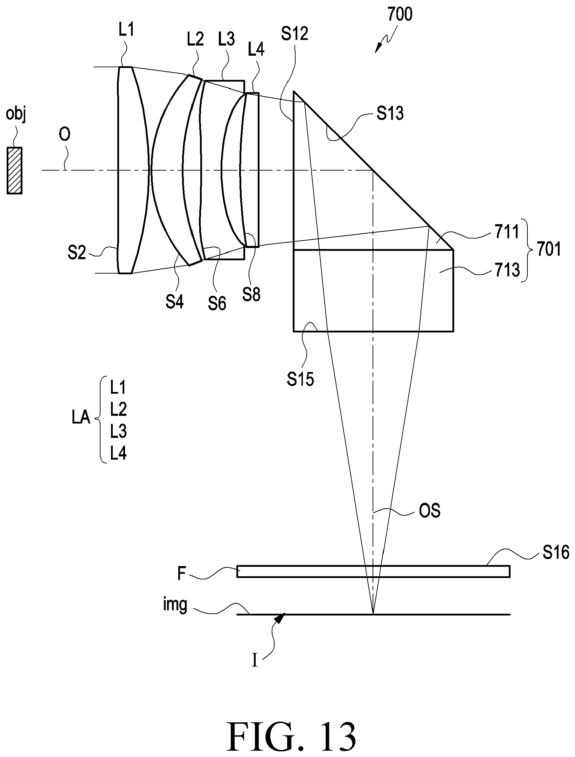

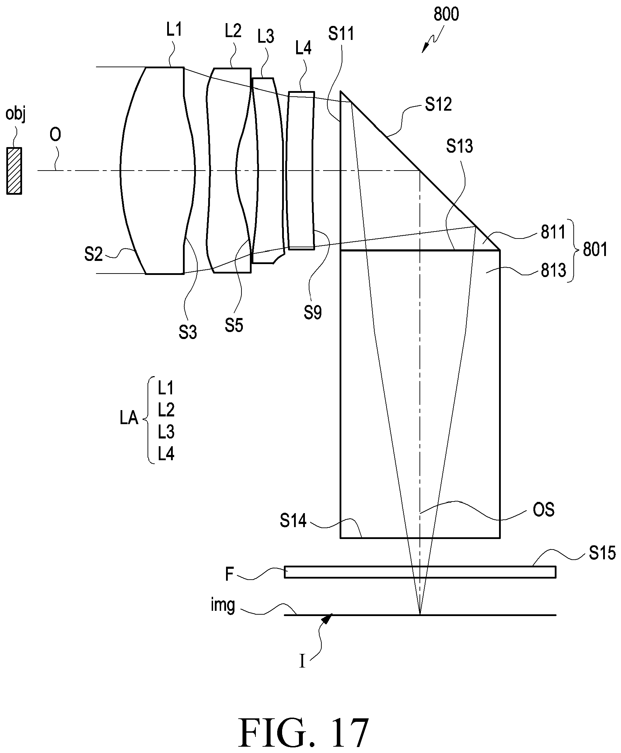

According to an embodiment, at least one lens having a negative refractive power may be disposed between the first lens L1 and the n-th lens (e.g., the fourth lens L4). For example, a third lens L3 may have a negative refractive power in the camera module 600 or 700 or the lens assembly LA of FIG. 9 or FIG. 13, and a second lens L2 may have a negative refractive power in a camera module 800 or the lens assembly LA of FIG. 17. As will be described later, the lens having a negative refractive power disposed between the first lens L1 and the n-th lens (e.g., the fourth lens L4) may facilitate chromatic aberration correction or refractive power arrangement of the lenses L1, L2, L3, and L4 by having a dispersion value within a specified range. In an embodiment, when a plurality of lenses having a negative refractive power are disposed between the first lens L1 and the n-th lens, a lens that is disposed closest to the n-th lens and has a negative refractive power may be configured to satisfy a condition related to a dispersion value described below.

According to an embodiment, at least one of the lenses L1, L2, L3, and L4 of the lens assembly LA may perform an autofocus function by reciprocating along a first linear movement direction LM1. The 'first linear movement direction LM1' may refer to a direction that is substantially parallel to the optical axis O or substantially coincident with the optical axis O. In an embodiment, at least one of the lenses L1, L2, L3, and L4 of the lens assembly LA may perform an anti-shake function by making a horizontal movement (e.g., vibration) along at least two directions (e.g., a second linear movement direction LM2) on a plane crossing the optical axis O. The 'plane crossing the optical axis O' may refer to a plane substantially perpendicular to the optical axis O. In an embodiment, substantially the entire lens assembly LA may perform the autofocus function and/or the anti-shake function by reciprocating.

According to an embodiment, the autofocus function and/or the anti-shake function may be implemented by reciprocation of the image sensor I. For example, the image sensor I may perform the autofocus function by reciprocating along a third linear movement direction LM3, and perform the anti-shake function by making a horizontal movement (e.g., vibration) along at least two directions (e.g., a fourth linear movement direction LM4) on a plane crossing a second optical axis OS. The 'second optical axis OS' may refer to a path in which light incident along the optical axis O of the lenses L1, L2, L3, and L4 reaches the image sensor I after being reflected by the reflective surface RS. The third linear movement direction LM3 may be substantially parallel to the second optical axis OS or substantially coincident with the second optical axis OS. Although there may be differences depending on the angle of the reflective surface RS with respect to the incident surface IS, the second optical axis OS may be disposed substantially perpendicular to the optical axis O of the lenses L1, L2, L3, and L4, in a structure where the incident surface IS and the reflective surface RS are disposed to form an angle of substantially 45 degrees.

According to an embodiment, the anti-shake function and/or an object tracking function may be implemented by a movement, rotation, and/or tilt operation of the optical member 601. For example, as the optical member 601 makes a horizontal movement (e.g., vibration) on a specified plane (e.g., a plane substantially parallel to an imaging plane img of the image sensor I) or performs a rotation and/or tilt operation RM about a specified point (or a rotation axis RA), the anti-shake function and/or the object tracking function may be implemented. In an embodiment, the rotation and/or tilt operation RM of the optical member 601 may be understood as an operation of changing the orientation or tilt angle of the incident surface IS, the reflective surface RS, and/or the emission surface ES with respect to the image sensor I (e.g., the imaging plane img).

According to an embodiment, the optical member 601 may include the incident surface IS disposed to face the lens assembly LA at least partially, the emission surface ES disposed to face the image sensor I at least partially, and/or the reflective surface RS disposed inclined with respect to the incident surface IS or the emission surface ES. For example, light (e.g., the incident light IL in FIG. 7) focused by the lens assembly LA may be incident on the optical member 601 through the incident surface IS, and the light incident into the optical member 601 may be reflected at least once by the reflective surface RS (e.g., the light RL1 traveling in the second direction D2 in FIG. 6 or FIG. 7) and then provided to the image sensor I through the emission surface ES. Although not shown, an additional reflective member (e.g., a mirror or a prism) may be disposed between the optical member 601 and the image sensor I within a range that satisfies the condition(s) described below, thereby implementing an optical path similar to that of FIG. 6 or FIG. 7.

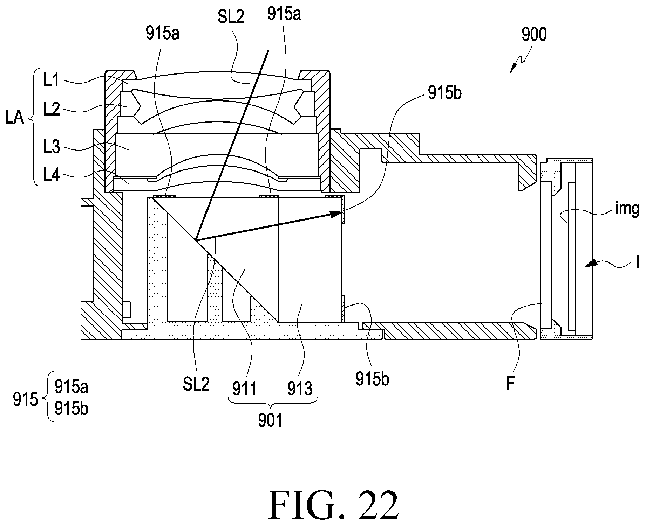

According to an embodiment, the optical member 601 may be implemented by a combination of a first optical member 611 and a second optical member 613. However, this is a distinction between portions of the optical member 601 for convenience of description, and an embodiment of the disclosure is not limited thereto. For example, the first optical member 611 and the second optical member 613 may be implemented as a single body (or one piece) where a portion provided with the reflective surface RS may be defined as the first optical member 611 having a triangular prism shape. In an embodiment, the light blocking member (e.g., the light blocking member 915 or 915a and 915b in FIG. 21 or FIG. 22) described below may be disposed on at least a portion (e.g., an area that does not interfere with light reaching the image sensor I) of a surface of the optical member 601. In an embodiment, when the first optical member 611 and the second optical member 613 are structured to be coupled facing each other, at least a portion of a boundary area between the first optical member 611 and the second optical member 613 may be provided as an area in which the light blocking members 915a and 915b are disposed. For example, the arrangement of the light blocking members 915a and 915b may be easier in a structure where the first optical member 611 and the second optical member 613 are combined, thereby suppressing or substantially preventing stray light or flare.

According to an embodiment, the first optical member 611 (and/or the second optical member 613) may provide the incident surface IS and/or the reflective surface RS, and the emission surface ES may be provided on the second optical member 613. In an embodiment, the incident surface IS or the emission surface ES may be generally implemented in a polygonal shape (e.g., rectangle). However, the embodiment(s) of the disclosure are not limited thereto, and the incident surface IS or the emission surface ES may be implemented in a circular or elliptical shape. In an embodiment, a corner formed by contact between two different surfaces of the first optical member 611 and/or the second optical member 613 may be processed into a curved surface or inclined surface shape. For example, as a corner is processed into a curved surface or inclined surface shape in a structure where two different surfaces of the first optical member 611 are disposed to form an acute, obtuse, and/or right angle, damage or breakage of the first optical member 611 may be suppressed even when the structure interferes with other structures or is exposed to an impact. This curved surface processing or inclined surface processing may be similar in the second optical member 613.

According to an embodiment, the curved surface processing or inclined surface processing of a corner portion in the optical member 601 (e.g., the first optical member 611 and/or the second optical member 613) may be one of the causes of stray light or flare. In an embodiment, the optical member 601 may satisfy at least some of the conditions described below, which may facilitate the implementation of the light blocking structure (e.g., the light blocking members 915a and 915b in FIG. 21 or FIG. 22). In an embodiment, the optical member 601 may include the light blocking members 915a and 915b on at least a portion of an outer surface thereof, in the remaining area of the incident surface IS other than an area where external light (e.g., light focused by the lens assembly LA) transmits, and/or in the remaining area of the emission surface ES other than an area where light to be guided to the image sensor IS transmits. The light blocking members 915a and 915b may, for example, absorb light traveling along an undesigned path or substantially block the light from being incident onto the image sensor I. These light blocking members 915a and 915b may be implemented in the form of a layer formed by a process such as printing, painting, coating, deposition, and/or plating, or in the form of an attachment such as a film or a sheet. As such, the optical member 601 may suppress stray light or flare while including a corner portion processed into a curved surface (or inclined surface), by including the light blocking members 915a and 915b.

According to an embodiment, the camera module 600 and/or the optical system thereof may further include the IR cut filter F. The IR cut filter F may, for example, suppress or block light of a wavelength (e.g., IR light) that is not identifiable by a user's naked eye but is sensed by a photosensitive material or the image sensor I from being incident on the image sensor I. This IR cut filter F may be disposed between the fourth lens L4 and the image sensor I or between the optical member 601 and the image sensor I. Depending on the purpose (e.g., a depth camera) of the camera module 600, the IR cut filter F may be replaced with a band-pass filter that transmits IR light and suppresses or blocks visible light.

According to an embodiment, the camera module 600 and/or the optical system thereof may satisfy a condition presented through the following [Equation 1].

$$[\text{Equation 1}]$$
$$0.1 \leq \frac{TL}{OTTL} \leq 0.6$$

Herein, 'TL' may be a distance from a vertex of an object-side surface S2 of the lens farthest from the optical member 601 and/or the image sensor I, for example, the first lens L1 to a vertex of an image-side surface S9 of the lens closest to the optical member 601, for example, the fourth lens L4 as the n-th lens. The 'vertex' of the object-side surface or image-side surface of the lens(es) L1, L2, L3, and L4 may refer to a point where the optical axis O crosses the lens surface. For example, 'TL' in [Equation 1] may represent a distance measured along the optical axis O from the object-side surface S2 of the first lens L1 to the image-side surface S9 of the fourth lens L4. In [Equation 1], 'OTTL' may represent a distance traveled by light incident along the optical axis O from the object-side surface S2 of the first lens L1 to the image sensor I. For example, 'OTTL' may be the sum of a first distance OTTL1 measured along the optical axis O from the vertex of the object-side surface S2 of the first lens L1 to the reflective surface RS, and a second distance OTTL2 from a point RP where the reflective surface RS crosses the optical axis O to the image sensor I. In an embodiment, the second distance OTTL2 may be the distance from the reflective surface RS to the image sensor I along the second optical axis OS.

According to an embodiment, when the condition of [Equation 1] is satisfied, the camera module 600 and/or the optical system thereof may provide telephoto performance while being easily mountable in an electronic device with a thickness of approximately 10mm or less. In an embodiment, when a value calculated by [Equation 1] is less than 0.1, it may be difficult to secure good image quality in telephoto mode. When it is greater than 0.6, it may be difficult to mount the camera module 600 and/or the optical system thereof in an electronic device with a thickness (e.g., about 10mm or less) smaller than a specified specification. For example, [Equation 1] may present a condition that allows for the miniaturization of the camera module 600 and/or the optical system thereof while providing telephoto performance. In an embodiment, the value calculated by [Equation 1] for the camera module 600 and/or the optical system thereof may be approximately 0.15 or more and approximately 0.25 or less.

According to an embodiment, the camera module 600 and/or the optical system thereof may satisfy a condition presented by [Equation 2].

$$[\text{Equation 2}]$$
$$1.25 \leq \frac{Pin}{Pout} \leq 10$$

Herein, 'Pin' may be a maximum length of a surface (e.g., the incident surface IS) on which light focused by the lenses L1, L2, L3, and L4 is incident in the optical member 601. For example, when the incident surface IS is rectangular, 'Pin' may be the length of a long side of the incident surface IS. In an embodiment, when the incident surface IS is elliptical, 'Pin' may be the length of a major diameter of the incident surface IS. In an embodiment, 'Pin' may be the length of the incident surface IS measured substantially parallel to a direction (e.g., the second optical axis OS) in which the second distance OTTL2 is measured. For example, when the incident surface IS of the optical member 601 is rectangular, the long side, or when the incident surface IS is elliptical, the major diameter, may be disposed substantially parallel to the second optical axis OS. In [Equation 2], 'Pout' may be a maximum length of a surface (e.g., the emission surface ES) of the optical member 601 disposed to face the image sensor I, and may be a length measured substantially parallel to a direction in which the first distance OTTL1 is measured. In an embodiment, when the optical member 601 includes a first outer surface 615 parallel to the incident surface IS, 'Pout' may be understood as the interval between the incident surface IS and the first outer surface 615. In an embodiment, a value calculated by [Equation 2] for the camera module 600 and/or the optical system thereof may be approximately 1.3 or more and approximately 2.5 or less.

According to an embodiment, the shape of the optical member 601 may not be limited by the illustrated embodiment. For example, a portion of the optical member 601 excluding the area through which light travels to be guided to the image sensor I through the optical member 601 of FIG. 8 or FIG. 9 may be removed, or a third or fourth optical member (not shown) may be further disposed on a surface (not shown) of the optical member 601. When the optical member 601 is manufactured in a shape different from the shape illustrated in FIG. 8 or FIG. 9, 'Pin' in [Equation 2] may be understood as a maximum length of the optical member 601 measured on a plane perpendicular to the optical axis O or a maximum length of the optical member 601 measured along a direction parallel to the second optical axis OS. In an embodiment, 'Pin' may be understood as a maximum length of the optical member 601 measured along a direction in which light perpendicularly passing through the emission surface ES travels, or a maximum length of the optical member 601 measured along a direction perpendicular to the imaging plane img of the image sensor I. In an embodiment, 'Pin' may be understood as a maximum length of the optical member 601 measured parallel to the direction in which the second distance OTTL2 is measured. When the optical member 601 is manufactured in a shape different from the shape illustrated in FIG. 8 or FIG. 9, 'Pout' in [Equation 2] may be understood as a maximum length of the optical member 601 measured on a plane perpendicular to the second optical axis OS or a maximum length of the optical member 601 measured along a direction parallel to the optical axis OS. In an embodiment, 'Pout' may be understood as a maximum length of the optical member 601 measured along a direction in which light perpendicularly passing through the incident surface IS travels toward the reflective surface RS, or a maximum length of the optical member 601 measured along a direction parallel to the imaging plane img of the image sensor I. In an embodiment, 'Pout' may be understood as a maximum length of the optical member 601 measured parallel to the direction in which the first distance OTTL1 is measured.

In an embodiment, the camera module 600 and/or the optical system thereof may provide an environment that facilitates the arrangement of the light blocking members 915a and 915b in a miniaturized structure by satisfying the condition presented through [Equation 2]. For example, when the value calculated by [Equation 2] is greater than 10, the size of the incident surface IS or the aforementioned second distance OTTL2 may increase, which may pose difficulties in the miniaturization of the camera module 600 and/or the optical system thereof. In an embodiment, when the value calculated by [Equation 2] is less than 1.25, most areas of the incident surface IS and/or the emission surface ES of the optical member 601 may be used as an optical path. For example, when the value calculated by [Equation 2] is less than 1.25, there may be difficulties in disposing the light blocking members 915a and 915b. As such, when the condition of [Equation 2] is satisfied, the camera module 600 and/or the optical system thereof may be miniaturized and effectively suppress stray light, while including the optical member 601. As will be described with reference to FIGS. 21 and 22, when light reflected or refracted at least once inside the optical member 601 travels along an undesigned path, the light blocking members 915a and 915b disposed in the optical member 601 may absorb or substantially block the light traveling toward the image sensor I along the undesigned path.

According to an embodiment, the camera module 600 and/or the optical system thereof may satisfy a condition presented through [Equation 3].

[Equation 3]

$$50 \leq Vd1 \leq 95$$

Herein, 'Vd1' represents the dispersion value of the lens disposed farthest from the optical member 601, for example, the first lens L1. The camera module 600, the optical system thereof, and/or the first lens L1 may be manufactured easily and facilitate chromatic aberration correction by satisfying the condition of [Equation 3]. For example, when the dispersion value Vd1 of the first lens L1 is less than 50, it may be difficult to secure favorable optical performance. When it is greater than 95, the first lens L1 may be softened, making it difficult to manufacture in a designed shape and making it vulnerable to deformation. In an embodiment, the dispersion value, for example, Abbe number of the first lens L1 in the camera module 600 and/or the optical system thereof may be approximately 60 or less.

According to an embodiment, the camera module 600 and/or the optical system thereof may satisfy a condition presented through [Equation 4].

[Equation 4]

$$10 \leq Vdneg \leq 45$$

Herein, 'Vdneg' may represent the dispersion value of a lens having a negative refractive power disposed between the first lens L1 and the n-th lens (e.g., the fourth lens L4 in FIG. 8 or FIG. 9). In an embodiment, when there are a plurality of lenses with a negative refractive power disposed between the first lens L1 and the fourth lens L4, the dispersion value of at least a lens disposed closest to the fourth lens L4 among the plurality of lenses having a negative refractive power may satisfy the condition of [Equation 4]. In an embodiment, [Equation 4] may present a condition that facilitates the arrangement and design of the lenses L1, L2, L3, and L4 while achieving favorable optical performance. For example, when the lens having a negative refractive power disposed closest to the fourth lens L4 satisfies the condition of [Equation 4], chromatic aberration correction and the arrangement of refractive powers may be facilitated in the camera module 600 and/or the optical system thereof. In an embodiment, the second lens L2 in the embodiments in FIG. 9 or FIG. 13 may satisfy the condition of [Equation 4], and the third lens L3 in the embodiment in FIG. 17 may satisfy the condition of [Equation 4]. In an embodiment, the dispersion value, for example, Abbe number of a lens satisfying the condition of [Equation 4] in the camera module 600 and/or the optical system thereof may be approximately 25 or more and approximately 40 or less.

According to an embodiment, the camera module 600 and/or the optical system thereof may satisfy a condition presented through [Equation 5].

[Equation 5]

$$5 \leq FOV \leq 35$$

[Equation 5] presents a condition for miniaturizing the camera module 600 and/or the optical system thereof while achieving telephoto performance. 'FOV' may represent the field of view of the camera module 600 and/or the optical system thereof. For example, when the field of view of the camera module 600 and/or the optical system thereof is less than 5, a focal length may increase, making the miniaturization of the camera module 600 or the optical system difficult. When it is greater than 35, the focal length may decrease, leading to difficulty in securing the second distance OTTL2 needed to satisfy the condition of [Equation 1]. In an embodiment, the field of view of the camera module 600 and/or the optical system thereof may be approximately 20 degrees or more and approximately 30 degrees or less.

According to an embodiment, the camera module 600 and/or the optical system thereof may satisfy conditions presented through the following [Equation 6] and [Equation 7].

[Equation 6]

$$1.45 \leq nd1 \leq 1.6$$

[Equation 7]

$$1.6 \leq ndn \leq 1.7$$

Herein, 'nd1' may represent the refractive index of the first lens L1 disposed farthest from the optical member 601 and/or the image sensor I, and 'ndn' may represent the refractive index of the n-th lens (e.g., the fourth lens L4 in FIG. 8 and/or FIG. 9) disposed closest to the optical member 601 and/or the image sensor I. In an embodiment, when the first lens L1 has a refractive index greater than 1.6 and is made of plastic, the dispersion value may be less than 35, leading to difficulties in chromatic aberration correction. In an embodiment, when the refractive index of the first lens L1 is less than 1.45, the refractive power of the first lens L1 may decrease, leading to difficulties in securing a focal length compliant with the design specification of the camera module 600 and/or the optical system thereof. In an embodiment, when the lens (e.g., the fourth lens L4 disposed as the n-th lens) disposed closest to the optical member 601 or the image sensor I has a refractive index greater than 1.7, the design freedom in selecting a material for that lens may be reduced. When it has a refractive index less than 1.6, there may be difficulties in controlling optical performance such as field curvature or astigmatism.

A camera module (e.g., the camera module 600, 700, 800, or 900 in FIG. 9, FIG. 13, and/or FIG. 17) and/or an optical system thereof according to the embodiments described above or below may satisfy the conditions of [Equation 1] to [Equation 5], as illustrated in [Table 1] below. It may be identified that the conditions presented by [Equation 6] and [Equation 7] are satisfied through [Tables] of lens data described below.

[Table 1]

|  | Equation 1 | Equation 2 | Equation 3 | Equation 4 | Equation 5 |
|---|---|---|---|---|---|
| Embodiment of FIG. 9 | 0.21 | 1.5 | 56.14 | 25.93 | 21.38 |
| Embodiment of FIG. 13 | 0.20 | 1.5 | 56.14 | 25.93 | 21.39 |
| Embodiment of FIG. 17 | 0.24 | 2.3 | 56.09 | 37.4 | 25.78 |

In the above-described embodiments, although some of the reference numerals assigned to the lens surfaces of FIG. 9 are not directly mentioned, those skilled in the art will understand the configuration of each of the lenses L1, L2, L3, and L4 based on the lens data presented through [Tables] described below. Lens surfaces 'S1', 'S10', and/or 'S11' may be reference positions used in the design and arrangement of the lenses L1, L2, L3, and L4, although they are omitted in FIG. 9 illustrating the layout of the lenses L1, L2, L3, and L4. According to an embodiment, in [Table 2] described below, 'S12' may represent the incident surface IS of the optical member 601, 'S13' may represent the reflective surface RS of the optical member 601, and 'S14' may represent a boundary surface between the first optical member 611 and the second optical member 613 of the optical member 601. In an embodiment, the emission surface ES of the optical member 601 may be exemplified as 'S15' in [Table 2]. In an embodiment described below, reference numerals 'SX' (where X is a natural number) for the surfaces of the lenses L1, L2, L3, and L4 or a surface of the optical member 601 may be assigned differently from what is mentioned in this embodiment, and when a lens surface is aspherical, symbol '*' may be added to the reference numeral of the lens surface. In the camera modules 600, 700, 800, and 900 of FIGS. 8 and 9 and/or FIGS. 13 and 17 described below, 'obj' may represent a subject or object located in a direction the camera modules 600, 700, 800, and 900 is directed. In an embodiment, 'obj' in FIGS. 8 and 9 and/or FIGS. 13 and 17 described below may be understood as a subject of an image that the user intends to acquire using the camera modules 600, 700, 800, and 900. In describing the following various embodiments, reference numerals for some of the object-side surface(s) and sensor-side surface(s) of the lenses L1, L2, L3, and L4 may be omitted for the brevity of the drawings. The configuration of the above-described embodiment may be adopted for the reference numerals of the lens surfaces omitted in the drawings and easily understood through the [Tables] of the lens data of each embodiment described below.

According to an embodiment, the camera module 600 (and/or the optical system thereof) of FIG. 8 and/or FIG. 9 may have a focal length of approximately 11.95mm, an F-number of approximately 3.145, and/or a field of view of approximately 21.38 degrees. In an embodiment, the camera module 600 and/or the optical system thereof may have a maximum image height of approximately 2.6mm, and the OTTL in [Equation 1] may be approximately 12.843mm. In an embodiment, the camera module 600 and/or the optical system thereof may satisfy at least some of various specifications such as the shapes and refractive powers of the afore-mentioned lens(es) L1, L2, L3, and L4 (e.g., lens surface(es)) and the shape of the optical member 601 (611 and 613), and/or the conditions presented by [Equations], and may be manufactured to the specifications illustrated in the following [Table 2].

[Table 2]

| Lens surface (Surf) | Radius of curvature (Radius) | Thickness (Thick) | Effective focal length (EFL) | Reflective index (nd) | Dispersion value (vd) |
|---|---|---|---|---|---|
| obj | infinity | Infinity |  |  |  |

(continued)

| Lens surface (Surf) | Radius of curvature (Radius) | Thickness (Thick) | Effective focal length (EFL) | Reflective index (nd) | Dispersion value (vd) |
|---|---|---|---|---|---|
| S1 | infinity | 0.00000 | | | |
| S2* | 6.95641 | 0.63040 | 7.544 | 1.54410 | 56.14 |
| S3* | -9.79209 | 0.03000 | | | |
| S4* | 2.59357 | 0.50023 | 9.966 | 1.54410 | 56.14 |
| S5* | 4.61484 | 0.36468 | | | |
| S6* | -4.95325 | 0.42424 | -2.778 | 1.61465 | 25.93 |
| S7* | 2.72863 | 0.31377 | | | |
| S8* | 3.10691 | 0.40072 | 6.577 | 1.65035 | 21.52 |
| S9* | 10.47604 | 0.60000 | | | |
| S10 | infinity | 0.00000 | | | |
| S11 | infinity | 0.00000 | | | |
| S12 | infinity | 1.47000 | infinity | 1.56883 | 56.04 |
| S13 | infinity | 1.47000 | infinity | 1.56883 | 56.04 |
| S14 | infinity | 1.47000 | infinity | 1.56883 | 56.04 |
| S15 | infinity | 4.28778 | | | |
| S16 | infinity | 0.21 | infinity | 1.51680 | 64.17 |
| S17 | infinity | 0.67383 | | | |
| img | infinity | -0.0024 | | | |

The following [Table 3] and [Table 4] describe the aspherical coefficients of the lenses L1, L2, L3, and L4, and an aspherical surface may be defined using the following [Equation 8].

[Equation 8]

$$x = \frac{y^2/R}{1+\sqrt{1-(1+k)(y/R)^2}} + \sum_i (A_i)(y^i)$$

In [Equation 8], "x" is a distance along the direction of the optical axis O from a point of a lens surface through which the optical axis O passes, "y" is a distance in a direction perpendicular to the optical axis O, measured from the optical axis O, 'R' is the radius of curvature at a vertex of a lens, 'k' represents a Conic constant, and 'Ai' represents an aspherical coefficient, which will be listed in the following [Table] as 'A', 'B', 'C', 'D', 'E', 'F', 'G', 'H', and 'J'. The radius of curvature may be, for example, the inverse of a curvature, which is a value indicating the degree of curvature at each point of a curved surface or a curve.

[Table 3]

| Lens surface (Surf) | 2_ASP | 3_ASP | 4_ASP | 5_ASP |
|---|---|---|---|---|
| Radius of curvature (Radius) | 6.956E+00 | -9.792E+00 | 2.594E+00 | 4.615E+00 |
| k(Conic) | -3.453E+01 | 7.015E+00 | -1.040E+00 | 1.129E+00 |
| A(4th)/C4 | 1.816E-03 | -2.539E-02 | 1.425E-02 | 6.232E-02 |
| B(6th)/C5 | -3.431E-03 | 3.222E-03 | -1.220E-02 | -1.948E-02 |
| C(8th)/C6 | 2.199E-03 | 1.296E-02 | -9.694E-03 | -6.493E-02 |
| D(10th)/C7 | -2.254E-03 | -1.320E-02 | 1.864E-02 | 9.002E-02 |

(continued)

| Lens surface (Surf) | 2_ASP | 3_ASP | 4_ASP | 5_ASP |
|---|---|---|---|---|
| E(12th)/C8 | 1.460E-03 | 6.871E-03 | -1.150E-02 | -6.008E-02 |
| F(14th)/C9 | -5.424E-04 | -2.186E-03 | 3.443E-03 | 2.355E-02 |
| G(16th)/C10 | 1.170E-04 | 4.284E-04 | -4.463E-04 | -5.450E-03 |
| H(18th)/C11 | -1.355E-05 | -4.743E-05 | -3.423E-07 | 6.822E-04 |
| J(20th)/C12 | 6.567E-07 | 2.281E-06 | 3.798E-06 | -3.502E-05 |

[Table 4]

| Lens surface (Surf) | 6_ASP | 7_ASP | 8_ASP | 9_ASP |
|---|---|---|---|---|
| Radius of curvature (Radius) | -4.953E+00 | 2.729E+00 | 3.107E+00 | 1.048E+01 |
| k(Conic) | -3.252E+01 | 1.384E+00 | -1.636E+00 | 1.999E+01 |
| A(4th)/C4 | 3.144E-02 | -5.898E-02 | -5.367E-02 | -6.222E-04 |
| B(6th)/C5 | 6.870E-02 | 1.195E-01 | 2.040E-03 | -4.230E-02 |
| C(8th)/C6 | -1.408E-01 | -6.520E-02 | 1.960E-01 | 1.826E-01 |
| D(10th)/C7 | 1.357E-01 | -1.365E-01 | -4.642E-01 | -3.707E-01 |
| E(12th)/C8 | -7.785E-02 | 2.901E-01 | 5.575E-01 | 4.408E-01 |
| F(14th)/C9 | 2.756E-02 | -2.436E-01 | -3.876E-01 | -3.175E-01 |
| G(16th)/C10 | -5.855E-03 | 1.079E-01 | 1.574E-01 | 1.363E-01 |
| H(18th)/C11 | 6.745E-04 | -2.488E-02 | -3.472E-02 | -3.212E-02 |
| J(20th)/C12 | -3.145E-05 | 2.354E-03 | 3.212E-03 | 3.196E-03 |

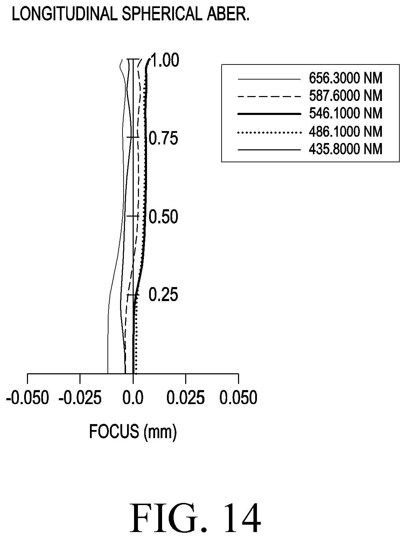

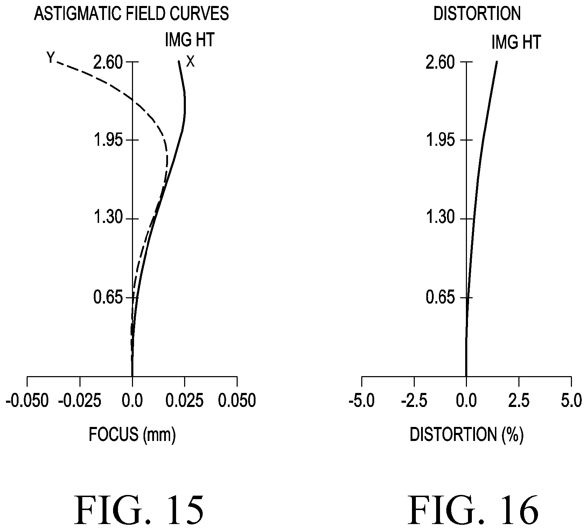

FIG. 13 is a diagram illustrating an optical system and/or a camera module 700 (e.g., the camera assembly 307 of FIG. 5 or the camera modules 500 and 600 of FIGS. 6 to 9) including the same according to an embodiment of the disclosure. FIG. 14 is a graph illustrating the spherical aberration of the optical system and/or the camera module 700 including the same shown in FIG. 13 according to an embodiment of the disclosure. FIG. 15 is a graph illustrating the astigmatism of the optical system and/or the camera module 700 including the same shown in FIG. 13 according to an embodiment of the disclosure. FIG. 16 is a graph illustrating the distortion of the optical system and/or the camera module 700 including the same shown in FIG. 13 according to an embodiment of the disclosure.

According to an embodiment, the camera module 700 (and/or the optical system thereof) of FIG. 13 may have a focal length of approximately 11.95mm, an F-number of approximately 3.196, and/or a field of view of approximately 21.39 degrees. In an embodiment, the camera module 700 and/or the optical system thereof may have a maximum image height of approximately 2.6mm, and the OTTL in [Equation 1] may be approximately 13.047mm. In an embodiment, the camera module 700 and/or the optical system thereof may satisfy at least some of various specifications such as the shapes and refractive powers of the afore-mentioned lens(es) L1, L2, L3, and L4 (e.g., lens surface(es)) and the shape of an optical member 701 (711 and 713), and/or the conditions presented by [Equations], and may be manufactured to the specifications illustrated in the following [Table 5]. In an embodiment, the lenses L1, L2, L3, and L4 may have the aspherical coefficients of [Table 6] and [Table 7].

[Table 5]

| Lens surface (Surf) | Radius of curvature (Radius) | Thickness (Thick) | Effective focal length (EFL) | Refractive index (nd) | Dispersion value (vd) |
|---|---|---|---|---|---|
| obj | infinity | infinity | | | |
| S1 | infinity | 0.00000 | | | |
| S2* | 37.59390 | 0.56800 | 7.916 | 1.54410 | 56.14 |
| S3* | -4.86173 | 0.03000 | | | |

(continued)

| Lens surface (Surf) | Radius of curvature (Radius) | Thickness (Thick) | Effective focal length (EFL) | Refractive index (nd) | Dispersion value (vd) |
|---|---|---|---|---|---|
| S4* | 2.38447 | 0.55621 | 10.486 | 1.54410 | 56.14 |
| S5* | 3.74747 | 0.36295 | | | |
| S6* | -5.31474 | 0.36570 | -3.196 | 1.61465 | 25.93 |
| S7* | 3.24460 | 0.33704 | | | |
| S8* | 5.84502 | 0.35691 | 8.287 | 1.65035 | 21.52 |
| S9* | -78.30775 | 0.60000 | | | |
| S10 | infinity | 0.00000 | | | |
| S11 | infinity | 0.00000 | | | |
| S12 | infinity | 1.47000 | infinity | 1.56883 | 56.04 |
| S13 | infinity | 1.47000 | infinity | 1.56883 | 56.04 |
| S14 | infinity | 1.47000 | infinity | 1.56883 | 56.04 |
| S15 | infinity | 3.14229 | | | |
| S16 | infinity | 0.21 | infinity | 1.51680 | 64.17 |
| S17 | infinity | 2.11021 | | | |
| img | infinity | -0.00242 | | | |

[Table 6]

| Lens surface (Surf) | 2_ASP | 3_ASP | 4_ASP | 5_ASP |
|---|---|---|---|---|
| Radius of curvature (Radius) | 3.759E+01 | -4.862E+00 | 2.384E+00 | 3.747E+00 |
| k(Conic) | -8.882E+01 | -1.829E+01 | -7.960E-01 | 1.145E+00 |
| A(4th)/C4 | -2.158E-02 | -2.416E-02 | 5.851E-02 | 1.132E-01 |
| B(6th)/C5 | 2.685E-02 | -1.702E-03 | -7.208E-02 | -1.189E-01 |
| C(8th)/C6 | -2.565E-02 | 1.196E-02 | 3.432E-02 | 5.771E-03 |
| D(10th)/C7 | 1.439E-02 | -1.029E-02 | -1.503E-02 | 4.880E-02 |
| E(12th)/C8 | -5.069E-03 | 5.353E-03 | 1.123E-02 | -2.910E-02 |
| F(14th)/C9 | 1.172E-03 | -1.783E-03 | -6.256E-03 | 4.510E-03 |
| G(16th)/C10 | -1.698E-04 | 3.747E-04 | 1.893E-03 | 1.469E-03 |
| H(18th)/C11 | 1.371E-05 | -4.512E-05 | -2.834E-04 | -6.212E-04 |
| J(20th)/C12 | -4.540E-07 | 2.374E-06 | 1.614E-05 | 6.312E-05 |

[Table 7]

| Lens surface (Surf) | 6_ASP | 7_ASP | 8_ASP | 9_ASP |
|---|---|---|---|---|
| Radius of curvature (Radius) | -5.315E+00 | 3.245E+00 | 5.845E+00 | -7.831E+01 |
| k(Conic) | -6.135E+01 | 1.988E+00 | -1.488E+01 | 9.178E+01 |
| A(4th)/C4 | 1.635E-02 | -1.203E-01 | -1.095E-01 | -3.107E-02 |
| B(6th)/C5 | 8.766E-02 | 2.615E-01 | 9.260E-02 | 4.832E-04 |
| C(8th)/C6 | -1.262E-01 | -2.461E-01 | 1.185E-01 | 1.446E-01 |
| D(10th)/C7 | 9.419E-02 | 1.646E-01 | -3.423E-01 | -3.031E-01 |

(continued)

| Lens surface (Surf) | 6_ASP | 7_ASP | 8_ASP | 9_ASP |
|---|---|---|---|---|
| E(12th)/C8 | -4.287E-02 | -1.220E-01 | 3.660E-01 | 3.302E-01 |
| F(14th)/C9 | 1.157E-02 | 9.131E-02 | -2.174E-01 | -2.151E-01 |
| G(16th)/C10 | -1.598E-03 | -4.545E-02 | 7.560E-02 | 8.480E-02 |
| H(18th)/C11 | 6.145E-05 | 1.207E-02 | -1.452E-02 | -1.881E-02 |
| J(20th)/C12 | 4.787E-06 | -1.296E-03 | 1.189E-03 | 1.804E-03 |

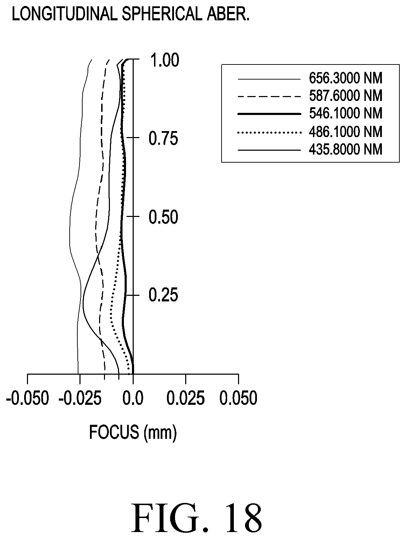

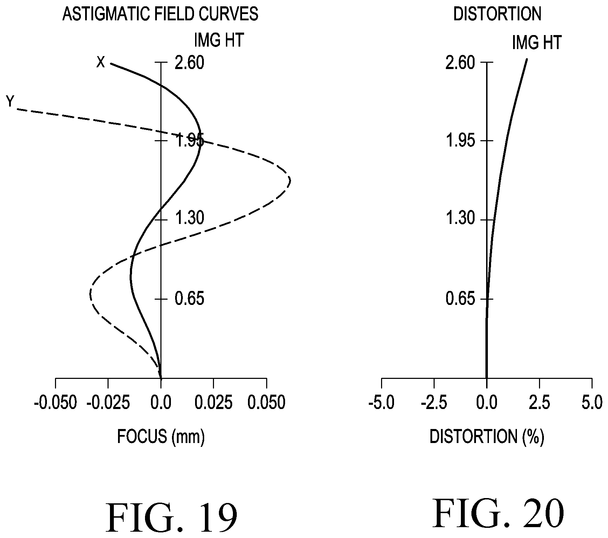

FIG. 17 is a diagram illustrating an optical system and/or a camera module 800 (e.g., the camera assembly 307 of FIG. 5 or the camera modules 500 and 600 of FIGS. 6 to 9) including the same according to an embodiment of the disclosure. FIG. 18 is a graph illustrating the spherical aberration of the optical system and/or the camera module 800 including the same shown in FIG. 17 according to an embodiment of the disclosure. FIG. 19 is a graph illustrating the astigmatism of the optical system and/or the camera module 800 including the same shown in FIG. 17 according to an embodiment of the disclosure. FIG. 20 is a graph illustrating the distortion of the optical system and/or the camera module 800 including the same shown in FIG. 17 according to an embodiment of the disclosure.

According to an embodiment, the camera module 800 (and/or the optical system thereof) of FIG. 17 may have a focal length of approximately 9.73mm, an F-number of approximately 3.475, and/or a field of view of approximately 25.78 degrees. In an embodiment, the camera module 800 and/or the optical system thereof may have a maximum image height of approximately 2.5mm, and the OTTL in [Equation 1] may be approximately 10.658mm. In the camera module 800 (and/or its optical system) of FIG. 17, the image sensor side surface S9 of the fourth lens (L4) may function as, for example, an aperture stop. In an embodiment, the camera module 800 and/or the optical system thereof may satisfy at least some of various specifications such as the shapes and refractive powers of the afore-mentioned lens(es) L1, L2, L3, and L4 (e.g., lens surface(es)) and the shape of an optical member 801 (811 and 813), and/or the conditions presented by [Equations], and may be manufactured to the specifications illustrated in the following [Table 8]. In an embodiment, the lenses L1, L2, L3, and L4 may have the aspherical coefficients of [Table 9] and [Table 10].

[Table 8]

| Lens surface (Surf) | Radius of curvature (Radius) | Thickness (Thick) | Effective focal length (EFL) | Refractive index (nd) | Dispersion value (vd) |
|---|---|---|---|---|---|
| obj | infinity | infinity | | | |
| S1 | infinity | 0.00000 | | | |
| S2* | 2.89245 | 1.02176 | 2.353 | 1.54410 | 56.09 |
| S3* | -2.02593 | 0.19824 | | | |
| S4* | -3.11610 | 0.35000 | -2.055 | 1.56717 | 37.4 |
| S5* | 1.95734 | 0.30000 | | | |
| S6* | -89.71509 | 0.35000 | 28.764 | 1.61554 | 25.8 |
| S7* | -14.92158 | 0.03000 | | | |
| S8* | 10.00486 | 0.35000 | 69.146 | 1.66074 | 20.38 |
| S9* | 12.59048 | 0.50000 | | | |
| S10 | infinity | 0.00000 | | | |
| S11 | infinity | 1.50000 | infinity | 1.51680 | 64.17 |
| S12 | infinity | 1.50000 | infinity | 1.51680 | 64.17 |
| S13 | infinity | 4.00000 | infinity | 1.51680 | 64.17 |
| S14 | infinity | 0.50000 | | | |
| S15 | infinity | 0.21000 | infinity | 1.51680 | 64.17 |
| S16 | infinity | 0.70266 | | | |

(continued)

| Lens surface (Surf) | Radius of curvature (Radius) | Thickness (Thick) | Effective focal length (EFL) | Refractive index (nd) | Dispersion value (vd) |
|---|---|---|---|---|---|
| img | infinity | -0.0004 | | | |

[Table 9]

| Lens surface (Surf) | 2_ASP | 3_ASP | 4_ASP | 5_ASP |
|---|---|---|---|---|
| Radius of curvature (Radius) | 2.892E+00 | -2.026E+00 | -3.116E+00 | 1.957E+00 |
| k(Conic) | -5.157E-02 | -2.660E+01 | -9.900E+01 | -1.318E+01 |
| A(4th)/C4 | -4.461E-03 | -5.682E-02 | 2.163E-01 | 5.801E-01 |
| B(6th)/C5 | -1.278E-04 | 4.511E-02 | -1.197E+00 | -2.162E+00 |
| C(8th)/C6 | -7.994E-03 | 4.753E-02 | 3.205E+00 | 3.993E+00 |
| D(10th)/C7 | 1.859E-02 | -7.519E-02 | -4.968E+00 | -3.622E+00 |
| E(12th)/C8 | -1.632E-02 | 3.066E-02 | 4.938E+00 | -4.530E-01 |
| F(14th)/C9 | 7.486E-03 | 9.616E-03 | -3.199E+00 | 4.904E+00 |
| G(16th)/C10 | -1.460E-03 | -1.198E-02 | 1.310E+00 | -5.211E+00 |
| H(18th)/C11 | -4.054E-05 | 3.394E-03 | -3.089E-01 | 2.430E+00 |
| J(20th)/C12 | 4.219E-05 | -2.422E-04 | 3.211E-02 | -4.377E-01 |

[Table 10]

| Lens surface (Surf) | 6_ASP | 7_ASP | 8_ASP | 9_ASP |
|---|---|---|---|---|
| Radius of curvature (Radius) | -8.972E+01 | -1.492E+01 | 1.000E+01 | 1.259E+01 |
| k(Conic) | 9.900E+01 | -9.900E+01 | 6.981E+01 | 6.457E+01 |
| A(4th)/C4 | 1.355E-01 | -8.053E-01 | -8.610E-01 | -7.669E-02 |
| B(6th)/C5 | 1.886E-01 | 5.918E+00 | 5.355E+00 | 2.415E-01 |
| C(8th)/C6 | -3.062E+00 | -2.302E+01 | -1.941E+01 | -3.740E-01 |
| D(10th)/C7 | 7.409E+00 | 5.356E+01 | 4.488E+01 | 4.500E-01 |
| E(12th)/C8 | -8.978E+00 | -7.894E+01 | -6.717E+01 | -5.914E-01 |
| F(14th)/C9 | 6.680E+00 | 7.561E+01 | 6.507E+01 | 7.092E-01 |
| G(16th)/C10 | -3.316E+00 | -4.612E+01 | -3.962E+01 | -5.859E-01 |
| H(18th)/C11 | 1.064E+00 | 1.637E+01 | 1.384E+01 | 2.754E-01 |
| J(20th)/C12 | -1.664E-01 | -2.579E+00 | -2.122E+00 | -5.491E-02 |

FIG. 21 is a diagram illustrating a camera module 900 (e.g., the camera assembly 307 of FIG. 5 or the camera modules 500, 600, 700, and 800 of FIGS. 6 to 9, FIG. 13, and/or FIG. 17) according to an embodiment of the disclosure. FIG. 22 is a diagram illustrating a configuration in which stray light is blocked in the camera module 900 of FIG. 21 according to an embodiment of the disclosure.

Referring to FIGS. 21 and 22, stray light SL1 and SL2 or flare may occur in a path where light incident on the camera module 900 from the outside is reflected or refracted by the lens assembly LA or L1, L2, L3, and L4 and/or an optical member 901 or 911 and 913. In a structure where the number of reflections or refractions in the optical member 901 is increased, and/or when a corner of the optical member 901 is processed into a curved or inclined surface shape, stray light or flare may become frequent. In the design and arrangement of the lens assembly LA and/or the optical member 901, it may be virtually impossible to predict all of the directions in which external light is incident on the camera module 900, as well as the directions of reflection and/or refraction inside the optical member 901. For example, in implementing an optical system by combining the plurality of lenses L1, L2, L3, and L4 and the optical member 901, the occurrence of the stray light SL1 and SL2 or flare may be inevitable. In the detailed description of the embodiment of FIGS. 21 and 22, the electronic devices 101, 200, 300, and 400 of FIGS. 1 to 7 and/or the camera module 600 of FIGS. 8 and 9 may be referred to together.

According to an embodiment of the disclosure, the camera module 900 and/or the optical system thereof may suppress the stray light SL1 and SL2 from reaching the image sensor I by including the light blocking member 915 or 915a and 915b. For example, the light blocking member 915 (e.g., a first light blocking member 915a) may be provided on at least a portion of the remaining area of an incident surface (e.g., the incident surface IS of FIG. 8) of the optical member 901, excluding an area through which light focused by the lens(es) L1, L2, L3, and L4 is transmitted. For example, the first light blocking member 915a may be provided on at least a portion of a periphery of an area of the incident surface IS facing the lens(es) L1, L2, L3, and L4 or an edge of the incident surface. The light blocking members 915a and 915b may be implemented by, for example, a layer formed by a process such as printing, painting, coating, deposition, and/or plating, and/or an attachment such as a film or a sheet. In an embodiment, the light blocking member 915 (e.g., a second light blocking member 915b) may be provided on at least a portion of the remaining area of an emission surface (e.g., the emission surface ES of FIG. 8) of the optical member 901, excluding an area through which light to be guided to the image sensor I is transmitted. For example, the second light blocking member 915b may be provided on at least a portion of an area of the emission surface ES corresponding to the image sensor I or an edge of the emission surface ES. In an embodiment, the light blocking members 915a and 915b may be provided on substantially the entire outer surface of the optical member 901, excluding the area through which light incident through the lenses L1, L2, L3, and L4 is transmitted or the area through which light to be guided to the image sensor I is transmitted. In an embodiment, when the optical member 901 is a structure combining the first optical member 911 and the second optical member 913, the light blocking members 915a and 915b may be further provided at a boundary between the first optical member 911 and the second optical member 913.

According to an embodiment, when the stray light SL1 and SL2 reaches the light blocking members 915a and 915b, it may be substantially absorbed by the light blocking members 915a and 915b or may not travel further in a current traveling direction. In an embodiment, when the light blocking members 915a and 915b are provided on the emission surface ES, the stray light SL1 and SL2 traveling toward the image sensor I may be substantially absorbed or blocked by the light blocking members 915a and 915b. For example, the camera module 900 and/or the optical system thereof according to the embodiment(s) of the disclosure may suppress degradation in the quality of a captured images by suppressing stray light from being incident on the image sensor.

As described above, a camera module (e.g., the camera assembly 307 of FIG. 5, the camera modules 500, 600, 700, 800, and 900 of FIGS. 6 to 9, FIG. 13, FIG. 17, FIG. 21, and/or FIG. 22), an optical system, and/or an electronic device including the same (e.g., the electronic devices 101, 200, 300, and 400 of FIGS. 1 to 6) according to embodiment(s) of the disclosure may be easily miniaturized while providing good telephoto performance. In an embodiment, when at least some of the above-described condition(s) are satisfied, the camera module, the optical system, and/or the electronic device including the same may suppress the degradation of image quality caused by stray light (e.g., the stray light SL1 and SL2 in FIG. 21 or 22). For example, a light blocking member (e.g., the light blocking members 915a and 915b of FIG. 21 or 22) may be easily disposed, thereby suppressing or substantially blocking light on an undesigned path from reaching an image sensor.

The effects achievable from the disclosure are not limited to the effects mentioned above, and other effects not mentioned herein will be clearly understood by those skilled in the art from the description of the above-described embodiment(s).

According to an embodiment of the disclosure, a camera module (e.g., the camera assembly 307, and the camera modules 500, 600, 700, 800, and 900 in FIGS. 6 to 9, FIG. 13, FIG. 17, FIG. 21, and/or FIG. 22) may include at least two lenses (e.g., the lenses L1, L2, L3, and L4 of FIG. 8 or FIG. 9) aligned along an optical axis (e.g., the optical axis O in FIG. 8 or FIG. 9), an optical member (e.g., the optical member 601 of FIG. 8 or FIG. 9) including a reflective surface (e.g., the reflective surface RS of FIG. 8) configured to reflect light focused by the lenses at least once, and an image sensor (e.g., the image sensor I of FIG. 9 or FIG. 9) disposed to detect the light reflected by the reflective surface. In an embodiment, the camera module and/or an optical system thereof may satisfy the following [Conditional Expression 1] and [Conditional Expression 2].

$$[\text{Conditional Expression 1}]$$

$$0.1 =< TL / OTTL =< 0.6$$

$$[\text{Conditional Expression 2}]$$

$$1.25 =< Pin / Pout =< 10$$

Herein, 'TL' may be a distance from a vertex of an object-side surface of a lens (hereinafter, referred to as a 'first lens (e.g., the first lens L1 of FIG. 8 or FIG. 9)') farthest from the optical member among the at least two lenses to a vertex of an image-side surface of a lens (hereinafter, referred to as an 'n-th lens (e.g., the fourth lens L4 of FIG. 8 or FIG. 9)') closest to the optical member among the at least two lenses. In an embodiment, "OTTL" may be a sum of a first distance (e.g., the first distance OTTL1 of FIG. 8) measured along the optical axis from the vertex of the object-side surface of the first lens to the reflective surface and a second distance (e.g., the second distance OTTL2 of FIG. 8) from a point crossing the optical axis on the reflective surface to the image sensor. In an embodiment, 'Pin' may be a maximum length of the optical member measured parallel to a measuring direction of the second distance. In an embodiment, 'Pout' may be a maximum length of the optical member measured parallel to a measuring direction of the first distance.

According to an embodiment, the optical member may further include an incident surface (e.g., the incident surface IS of FIG. 8) on which the light focused by the lenses is incident, an emission surface (e.g., the emission surface ES of FIG. 8) disposed to face the image sensor, and a light blocking member (e.g., the light blocking members 915a and 915b of FIG. 21 or FIG. 22) provided on at least a portion of an edge of the incident surface of the optical member or at least a portion of an edge of the emission surface.

According to an embodiment, the camera module and/or the optical system thereof may satisfy the following [Conditional Expression 3].

$$[\text{Conditional Expression 3}]$$

$$50 =< Vd\_1 =< 95$$

Herein, 'Vd_1' may be a dispersion value of the first lens.

According to an embodiment, the camera module and/or the optical system may further include at least one lens having a negative refractive power and disposed between the first lens and the n-th lens. In an embodiment, a lens disposed closest to the n-th lens among the at least one lens having a negative refractive power may satisfy the following [Conditional Expression 4].

$$[\text{Conditional Expression 4}]$$

$$10 =< Vd\_neg =< 45$$

Herein, 'Vd_neg' may be a dispersion value of the lens disposed closest to the n-th lens among the at least one lens having a negative refractive power.

According to an embodiment, the camera module and/or the optical system thereof may have a field of view of 5 degrees or more and 35 degrees or less.

According to an embodiment, at least one of the at least two lenses may be configured to reciprocate along the optical axis.

According to an embodiment, at least one of the at least two lenses may be configured to move horizontally on a plane crossing the optical axis.

According to an embodiment, the optical member may be configured to perform a horizontal movement, rotation, or tilt operation with respect to the image sensor.

According to an embodiment, the image sensor may be configured to move horizontally on a plane crossing a direction of propagation of the light reflected by the reflective surface and incident on the image sensor.

According to an embodiment, the first lens may have a positive refractive power, and satisfy the following [Conditional Expression 5] and [Conditional Expression 6].

$$[\text{Conditional Expression 5}]$$

$$1.45 =< nd1 =< 1.6$$

$$[\text{Conditional Expression 6}]$$

$$1.6 =< ndn =< 1.7$$

Herein, 'nd1' may be a refractive index of the first lens, and 'ndn' may be a refractive index of the n-th lens.

According to an embodiment, the optical member may further include an incident surface on which the light focused by the lenses is incident, and a first outer surface (e.g., the first outer surface 615 of FIG. 8) parallel with the incident surface. In this case, 'Pout' may be an interval between the incident surface and the first outer surface.

According to an embodiment of the disclosure, an electronic device (e.g., the electronic devices 101, 200, 300, and 400 of FIGS. 1 to 6) may include a camera module (e.g., the camera assembly 307, and the camera modules 500, 600, 700, 800, and 900 in FIGS. 6 to 9, FIG. 13, FIG. 17, FIG. 21, and/or FIG. 22) and a processor (e.g., the processor 120 of FIG. 1) configured to obtain an object image using the camera module. In an embodiment, the camera module may include at least two lenses (e.g., the lenses L1, L2, L3, and L4 of FIG. 8 or FIG. 9) aligned along an optical axis (e.g., the optical axis O in FIG. 8 or FIG. 9), an optical member (e.g., the optical member 601 of FIG. 8 or FIG. 9) including a reflective surface (e.g., the reflective surface RS of FIG. 8) configured to reflect light focused by the lenses at least once, and an image sensor (e.g., the image sensor I of FIG. 9 or FIG. 9) disposed to detect the light reflected by the reflective surface. In an embodiment, the electronic device, the camera module, and/or an optical system thereof may satisfy the following [Conditional Expression 1] and [Conditional Expression 2].

$$[\text{Conditional Expression 1}]$$

$$0.1 =< TL / OTTL =< 0.6$$

$$[\text{Conditional Expression 2}]$$

$$1.25 =< Pin / Pout =< 10$$

Herein, 'TL' may be a distance from a vertex of an object-side surface of a lens (hereinafter, referred to as a 'first lens (e.g., the first lens L1 of FIG. 8 or FIG. 9)') farthest from the optical member among the at least two lenses to a vertex of an image-side surface of a lens (hereinafter, referred to as an 'n-th lens (e.g., the fourth lens L4 of FIG. 8 or FIG. 9)') closest to the optical member among the at least two lenses. In an embodiment, "OTTL" may be a sum of a first distance (e.g., the first distance OTTL1 of FIG. 8) measured along the optical axis from the vertex of the object-side surface of the first lens to the reflective surface and a second distance (e.g., the second distance OTTL2 of FIG. 8) from a point crossing the optical axis on the reflective surface to the image sensor. In an embodiment, 'Pin' may be a maximum length of the optical member measured parallel to a measuring direction of the second distance. In an embodiment, 'Pout' may be a maximum length of the optical member measured parallel to a measuring direction of the first distance.

According to an embodiment, the optical member may further include an incident surface on which the light focused by the lenses is incident, and a first outer surface (e.g., the first outer surface 615 of FIG. 8) parallel to the incident surface. In an embodiment, 'Pout' may be an interval between the incident surface and the first outer surface.

According to an embodiment, the first lens may have a positive refractive power.

According to an embodiment, the electronic device, the camera module, and/or the optical system thereof may satisfy the following [Conditional Expression 3].

$$[\text{Conditional Expression 3}]$$

$$50 =< Vd\_1 =< 95$$

Herein, 'Vd_1' may be a dispersion value of the first lens.

According to an embodiment, the electronic device and/or the camera module may further include an incident surface on which the light focused by the lenses is incident, as a part of surfaces of the optical member, an emission surface disposed toward the image sensor, as another part of the surfaces of the optical member, and a light blocking member (e.g., the light blocking members 915a and 915b of FIG. 21 or FIG. 22) provided on at least a portion of an edge of the incident surface or at least a portion of an edge of the emission surface.

According to an embodiment, the electronic device and/or the camera module may further include at least one lens having a negative refractive power and disposed between the first lens and the n-th lens. In an embodiment, a lens disposed closest to the n-th lens among the at least one lens having a negative refractive power may satisfy the following [Conditional Expression 4].

$$[\text{Conditional Expression 4}]$$

$$10 =< Vd\_neg =< 45$$

Herein, 'Vd_neg' may be a dispersion value of the lens disposed closest to the n-th lens among the at least one lens having a negative refractive power.

According to an embodiment, the first lens may have a positive refractive power, and the electronic device, the camera module, and/or the optical system thereof may satisfy the following [Conditional Expression 5] and [Conditional Expression 6].

[Conditional Expression 5]

$$1.45 =< nd1 =< 1.6$$

[Conditional Expression 6]

$$1.6 =< ndn =< 1.7$$

Herein, 'nd1' may be a refractive index of the first lens, and 'ndn' may be a refractive index of the n-th lens.

According to an embodiment, the electronic device, the camera module, and/or the optical system thereof may have a field of view of 5 degrees or more and 35 degrees or less.

According to an embodiment, the image sensor may be configured to move horizontally on a plane crossing a direction of propagation of the light reflected by the reflective surface and incident on the image sensor.

While the disclosure has been described with reference to an exemplary embodiment, it should be understood that the embodiment is intended to be illustrative and not limiting. It will be apparent to those skilled in the art that various changes in form and details may be made without departing from the scope of the disclosure, including the appended claims and their equivalents.

**Claims**

1.   A camera module (207; 500; 600; 700; 800; 900) comprising:

at least two lenses (L1, L2, L3, L4) aligned along an optical axis;
an optical member (R; 601; 701; 801; 901) including a reflective surface (RS) configured to reflect light focused by the lenses at least once; and
an image sensor (I) disposed to detect the light reflected by the reflective surface,
wherein the camera module satisfies following [Conditional Expression 1] and [Conditional Expression 2],

[Conditional Expression 1]

$$0.1 =< TL / OTTL =< 0.6$$

[Conditional Expression 2]

$$1.25 =< Pin / Pout =< 10$$

where 'TL' is a distance from a vertex of an object-side surface of a lens (hereinafter, referred to as a 'first lens (L1)') farthest from the optical member among the at least two lenses to a vertex of an image-side surface of a lens (hereinafter, referred to as an 'n-th lens') closest to the optical member among the at least two lenses,
"OTTL" is a sum of a first distance (OTTL1) measured along the optical axis from the vertex of the object-side surface of the first lens to the reflective surface and a second distance (OTTL2) from a point crossing the optical axis on the reflective surface to the image sensor,
'Pin' is a maximum length of the optical member measured parallel to a measuring direction of the second distance, and
'Pout' is a maximum length of the optical member measured parallel to a measuring direction of the first distance.

2.   The camera module of claim 1, wherein the optical member further comprises:

an incident surface on which the light focused by the lenses is incident;

an emission surface disposed to face the image sensor; and
a light blocking member (915a, 915b) provided on at least a portion of an edge of the incident surface of the optical member or at least a portion of an edge of the emission surface.

3. The camera module of claim 1 or 2, wherein the camera module satisfies following [Conditional Expression 3],

$$[\text{Conditional Expression 3}]$$

$$50 =< Vd\_1 =< 95$$

where 'Vd_1' is a dispersion value of the first lens.

4. The camera module of any one of claims 1 to 3, further comprising at least one lens having a negative refractive power and disposed between the first lens and the n-th lens,

wherein a lens disposed closest to the n-th lens among the at least one lens having a negative refractive power satisfies following [Conditional Expression 4],

$$[\text{Conditional Expression 4}]$$

$$10 =< Vd\_neg =< 45$$

where 'Vd_neg' is a dispersion value of the lens disposed closest to the n-th lens among the at least one lens having a negative refractive power.

5. The camera module of any one of claims 1 to 4, wherein the camera module has a field of view (FOV) of 5 degrees or more and 35 degrees or less.

6. The camera module of any one of claims 1 to 5, wherein at least one of the at least two lenses is configured to reciprocate along the optical axis.

7. The camera module of any one of claims 1 to 6, wherein at least one of the at least two lenses is configured to move horizontally on a plane crossing the optical axis.

8. The camera module of any one of claims 1 to 7, wherein the optical member is configured to perform a horizontal movement, rotation, or tilt operation with respect to the image sensor.

9. The camera module of any one of claims 1 to 8, wherein the image sensor is configured to move horizontally on a plane crossing a direction of propagation of the light reflected by the reflective surface and incident on the image sensor.

10. The camera module of any one of claims 1 to 9, wherein the first lens has a positive refractive power, and the camera module satisfies following [Conditional Expression 5] and [Conditional Expression 6],

$$[\text{Conditional Expression 5}]$$

$$1.45 =< nd1 =< 1.6$$

$$[\text{Conditional Expression 6}]$$

$$1.6 =< ndn =< 1.7$$

where 'nd1' is a refractive index of the first lens, and 'ndn' is a refractive index of the n-th lens.

11. The camera module of any one of claims 1 to 10, wherein the optical member further comprises:

an incident surface on which the light focused by the lenses is incident; and
a first outer surface (615) parallel with the incident surface, and
wherein 'Pout' is an interval between the incident surface and the first outer surface.

12. The camera module of any one of claims 1 to 11, wherein the first lens has a positive refractive power.

13. An electronic device (101; 200; 300; 400) comprising:

a camera module (207; 500; 600; 700; 800; 900) of any one of claims 1 to 12; and
a processor (120) configured to obtain an object image using the camera module.

FIG. 1

EP 4 761 256 A1

FIG. 2

FIG. 3

FIG. 4

FIG. 5

FIG. 6

FIG. 7

FIG. 8

FIG. 9

LONGITUDINAL SPHERICAL ABER.

FIG. 10

ASTIGMATIC FIELD CURVES

IMG HT

DISTORTION

IMG HT

FOCUS (mm)

DISTORTION (%)

FIG. 11

FIG. 12

FIG. 13

LONGITUDINAL SPHERICAL ABER.

FIG. 14

ASTIGMATIC FIELD CURVES

DISTORTION

FIG. 15

FIG. 16

FIG. 17

LONGITUDINAL SPHERICAL ABER.

| | 656.3000 NM |
| --- | --- |
| | 587.6000 NM |
| | 546.1000 NM |
| | 486.1000 NM |
| | 435.8000 NM |

FOCUS (mm)

# FIG. 18

ASTIGMATIC FIELD CURVES

IMG HT

X

Y

2.60

1.95

1.30

0.65

-0.050 -0.025 0.0 0.025 0.050

FOCUS (mm)

FIG. 19

DISTORTION

IMG HT

2.60

1.95

1.30

0.65

-5.0 -2.5 0.0 2.5 5.0

DISTORTION (%)

FIG. 20

**FIG. 21**

FIG. 22

## INTERNATIONAL SEARCH REPORT

| International application No. |
|---|
| **PCT/KR2024/008624** |

### A. CLASSIFICATION OF SUBJECT MATTER

**H04N 23/55**(2023.01)i; **H04N 23/54**(2023.01)i; **H04N 23/57**(2023.01)i; **G03B 17/12**(2006.01)i; **G03B 30/00**(2021.01)i; **G02B 13/00**(2006.01)i; **G02B 15/14**(2006.01)i

According to International Patent Classification (IPC) or to both national classification and IPC

### B. FIELDS SEARCHED

Minimum documentation searched (classification system followed by classification symbols)

H04N 23/55(2023.01); G02B 13/00(2006.01); G02B 13/18(2006.01); G02B 27/64(2006.01); G02B 3/00(2006.01); G02B 5/20(2006.01); G02B 9/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 렌즈 (lens), 반사 (reflect), 거리 (distance), 길이 (length), 이미지 센서 (image sensor)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0100539 A (SAMSUNG ELECTRONICS CO., LTD.) 05 July 2023 (2023-07-05)<br>See paragraphs [0026]-[0102]. | 1-13 |
| A | JP 2023-030021 A (PHOTONIC SENSORS & ALGORITHMS S.L.) 07 March 2023 (2023-03-07)<br>See paragraphs [0011]-[0073]. | 1-13 |
| A | KR 10-2023-0071109 A (SAMSUNG ELECTRO-MECHANICS CO., LTD.) 23 May 2023 (2023-05-23)<br>See claims 1-14. | 1-13 |
| A | US 2022-0283405 A1 (LARGAN PRECISION CO., LTD.) 08 September 2022 (2022-09-08)<br>See claims 1-17. | 1-13 |
| A | US 2021-0063703 A1 (SAMSUNG ELECTRO-MECHANICS CO., LTD.) 04 March 2021 (2021-03-04)<br>See paragraphs [0009]-[0035]. | 1-13 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 September 2024** | **30 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2024/008624**

| Patent document cited in search report | | | Publication date (day/month/year) | Patent family member(s) | | | Publication date (day/month/year) |
|---|---|---|---|---|---|---|---|
| KR | 10-2023-0100539 | A | 05 July 2023 | EP | 4394475 | A1 | 03 July 2024 |
| | | | | US | 2023-0204924 | A1 | 29 June 2023 |
| | | | | WO | 2023-128625 | A1 | 06 July 2023 |
| JP | 2023-030021 | A | 07 March 2023 | CN | 112005150 | A | 27 November 2020 |
| | | | | CN | 112005150 | B | 18 July 2023 |
| | | | | DE | 112018007283 | T5 | 31 December 2020 |
| | | | | ES | 2854573 | A1 | 21 September 2021 |
| | | | | GB | 2585782 | A | 20 January 2021 |
| | | | | GB | 2585782 | B | 09 November 2022 |
| | | | | JP | 2021-529334 | A | 28 October 2021 |
| | | | | KR | 10-2020-0131836 | A | 24 November 2020 |
| | | | | KR | 10-2633636 | B1 | 06 February 2024 |
| | | | | US | 11456326 | B2 | 27 September 2022 |
| | | | | US | 2021-0366968 | A1 | 25 November 2021 |
| | | | | WO | 2019-174756 | A1 | 19 September 2019 |
| | | | | WO | 2019-174758 | A1 | 19 September 2019 |
| KR | 10-2023-0071109 | A | 23 May 2023 | CN | 112444951 | A | 05 March 2021 |
| | | | | CN | 112444951 | B | 09 December 2022 |
| | | | | CN | 115718359 | A | 28 February 2023 |
| | | | | CN | 115826194 | A | 21 March 2023 |
| | | | | CN | 212905674 | U | 06 April 2021 |
| | | | | KR | 10-2021-0027189 | A | 10 March 2021 |
| | | | | KR | 10-2534055 | B1 | 19 May 2023 |
| | | | | TW | 202109126 | A | 01 March 2021 |
| | | | | TW | 202206884 | A | 16 February 2022 |
| | | | | TW | 202314321 | A | 01 April 2023 |
| | | | | TW | I746139 | B | 11 November 2021 |
| | | | | TW | I789941 | B | 11 January 2023 |
| | | | | US | 11662552 | B2 | 30 May 2023 |
| | | | | US | 12072553 | B2 | 27 August 2024 |
| | | | | US | 2021-0063703 | A1 | 04 March 2021 |
| | | | | US | 2023-0251461 | A1 | 10 August 2023 |
| US | 2022-0283405 | A1 | 08 September 2022 | CN | 108663777 | A | 16 October 2018 |
| | | | | CN | 108663777 | B | 07 August 2020 |
| | | | | TW | 201837522 | A | 16 October 2018 |
| | | | | TW | I626487 | B | 11 June 2018 |
| | | | | US | 10545315 | B2 | 28 January 2020 |
| | | | | US | 11372203 | B2 | 28 June 2022 |
| | | | | US | 11822150 | B2 | 21 November 2023 |
| | | | | US | 2018-0284394 | A1 | 04 October 2018 |
| | | | | US | 2020-0110248 | A1 | 09 April 2020 |
| | | | | US | 2024-0053583 | A1 | 15 February 2024 |
| US | 2021-0063703 | A1 | 04 March 2021 | CN | 112444951 | A | 05 March 2021 |
| | | | | CN | 112444951 | B | 09 December 2022 |
| | | | | CN | 115718359 | A | 28 February 2023 |
| | | | | CN | 115826194 | A | 21 March 2023 |
| | | | | CN | 212905674 | U | 06 April 2021 |
| | | | | KR | 10-2021-0027189 | A | 10 March 2021 |
| | | | | KR | 10-2023-0071109 | A | 23 May 2023 |
| | | | | KR | 10-2534055 | B1 | 19 May 2023 |

Form PCT/ISA/210 (patent family annex) (July 2022)

INTERNATIONAL SEARCH REPORT
Information on patent family members

International application No.

**PCT/KR2024/008624**

| Patent document cited in search report | Publication date (day/month/year) | Patent family member(s) | | Publication date (day/month/year) |
|---|---|---|---|---|
| | | TW 202109126 | A | 01 March 2021 |
| | | TW 202206884 | A | 16 February 2022 |
| | | TW 202314321 | A | 01 April 2023 |
| | | TW I746139 | B | 11 November 2021 |
| | | TW I789941 | B | 11 January 2023 |
| | | US 11662552 | B2 | 30 May 2023 |
| | | US 12072553 | B2 | 27 August 2024 |
| | | US 2023-0251461 | A1 | 10 August 2023 |